(19) **Europäisches Patentamt / European Patent Office / Office européen des brevets**

(11) **EP 3 367 307 B1**

(12) **FASCICULE DE BREVET EUROPEEN**

(45) Date de publication et mention de la délivrance du brevet:
**10.12.2025 Bulletin 2025/50**

(21) Numéro de dépôt: **18153039.5**

(22) Date de dépôt: **18.01.2011**

(51) Classification Internationale des Brevets (IPC):
**G06T 17/20** (2006.01)    **G06T 19/00** (2011.01)
**G06T 7/00** (2017.01)

(52) Classification Coopérative des Brevets (CPC):
**G06T 19/00; G02C 13/003; G06T 7/149; G06T 7/70; G06T 19/006**

(54) **DISPOSITIF ET PROCÉDÉ DE GÉNÉRATION D'UN MODÈLE GÉOMÉTRIQUE SIMPLIFIÉ D'UNE PAIRE DE LUNETTES RÉELLES**

**VORRICHTUNG UND VERFAHREN ZUR ERZEUGUNG EINES VEREINFACHTEN GEOMETRISCHEN MODELLS EINER REALEN BRILLE**

**DEVICE AND METHOD FOR GENERATING A SIMPLIFIED GEOMETRIC MODEL OF A PAIR OF REAL SPECTACLES**

(84) Etats contractants désignés:
**AL AT BE BG CH CY CZ DE DK EE ES FI GB GR HR HU IE IS IT LI LT LU LV MC MK MT NL NO PL PT RO RS SE SI SK SM TR**

(30) Priorité: **18.01.2010 FR 1050305**

(43) Date de publication de la demande:
**29.08.2018 Bulletin 2018/35**

(62) Numéro(s) de document de la (des) demande(s) initiale(s) en application de l'article 76 CBE:
**11700355.8 / 2 526 510**

(73) Titulaire: **Fittingbox**
**31670 Labege (FR)**

(72) Inventeur: **CHOUKROUN, Ariel**
**31650 SAINT ORENS DE GAMEVILLE (FR)**

(74) Mandataire: **Santarelli**
**Tour Trinity**
**1 bis Place de la Défense**
**92400 Courbevoie (FR)**

(56) Documents cités:
**US-A1- 2003 063 086**

- YEMEZ Y ET AL: "Shape from silhouette using topology-adaptive mesh deformation", PATTERN RECOGNITION LETTERS, ELSEVIER, AMSTERDAM, NL, vol. 30, no. 13, 1 October 2009 (2009-10-01), pages 1198 - 1207, XP026445508, ISSN: 0167-8655, [retrieved on 20090621]
- JEREMY SEEBA: "Mesh Simplification using Quadric Error Metrics", 1 January 2006 (2006-01-01), XP055490024, Retrieved from the Internet <URL:http://users.csc.calpoly.edu/~zwood/teaching/csc570/final06/jseeba/> [retrieved on 20180704]
- NOBUHARA S ET AL: "Dynamic 3d shape from multi-viewpoint images using deformable mesh model", IMAGE AND SIGNAL PROCESSING AND ANALYSIS, 2003. ISPA 2003. PROCEEDINGS OF THE 3RD INTERNATIONAL SYMPOSIUM ON ROME, ITALY SEPT. 18-20, 2003, PISCATAWAY, NJ, USA,IEEE, ZAGREB, CROATIA, vol. 1, 18 September 2003 (2003-09-18), pages 192 - 197, XP010704990, ISBN: 978-953-184-061-3, DOI: 10.1109/ISPA.2003.1296892
- WOJCIECH MATUSIK ET AL: "Acquisition and Rendering of Transparent and Refractive Objects", THIRTEENTH EUROGRAPHICS WORKSHOP ON RENDERING, 1 January 2002 (2002-01-01), XP055437777, Retrieved from the Internet <URL:http://www.csbio.unc.edu/mcmillan/pubs/EGRW02_matusik.pdf>

## Description

La présente invention appartient au domaine du traitement d'image et de la synthèse d'images. Elle touche plus particulièrement l'intégration d'un objet virtuel dans des photographies ou vidéo en temps réel.

### Contexte de l'invention et problème posé

Le contexte de l'invention est celui de l'essayage virtuel d'objet en temps réel d'une manière la plus réaliste possible, ces objets étant typiquement des lunettes à intégrer dans une photographie ou une vidéo, représentant le visage d'une personne orientée sensiblement en face de la caméra.

La croissance de la vente sur internet, un stock limité ou toute autre raison empêchant ou gênant l'essayage réel d'objet réel génère un besoin d'essayage virtuel de cet objet. Les solutions actuelles se basant sur une réalité virtuelle ou sur une réalité augmentée sont insuffisantes dans le cas des lunettes car elles manquent de réalisme ou d'interactivité. De plus, elles nécessitent la plupart du temps beaucoup de données et beaucoup de temps de calcul. Le brevet US 2003/063086 A1 (BAUMBERG ADAM MICHAEL [GB], publié le 3 avril 2003, décrit la génération d'un modèle 3D d'un objet réel à partir des silhouettes de l'objet réel.

### Objectif de l'invention

L'objectif de cette invention est de proposer un procédé de modélisation de lunettes virtuelles représentant des lunettes réelles et un procédé d'intégration en temps réel de ces dites lunettes virtuelles d'une façon photoréaliste dans une photo ou une vidéo représentant le visage d'un individu en limitant le nombre de données nécessaires.

Par intégration, on entend un positionnement et un rendu réaliste de ces lunettes virtuelles sur une photo ou une vidéo représentant un individu sans lunettes générant donc une nouvelle photo ou une vidéo équivalente à la photo ou la vidéo de l'individu qu'on aurait obtenu en photographiant ou en filmant ce même individu portant les lunettes réelles correspondantes à ces lunettes virtuelles.

### Exposé de l'invention

L'invention est définie par les revendications indépendantes.

Un exemple, ne faisant pas parti de l'invention, décrit un procédé de création d'une image finale photoréaliste temps-réel d'un objet virtuel, correspondant à un objet réel, disposé sur une photo d'origine d'un utilisateur, selon une orientation réaliste liée à la position dudit utilisateur, caractérisé en ce qu'il comporte des étapes suivantes :

- 510 : détection de la présence d'une zone de placement de l'objet dans une photo d'origine,
- 530 : détermination de la position de points caractéristiques de la zone de placement de l'objet dans la photo d'origine,
- 540 : détermination de l'orientation 3D du visage, c'est à dire des angles $\Phi$ et $\Psi$ de l'appareil ayant pris la photo par rapport au plan principal de la zone de placement de l'objet,
- 550 : choix de la texture à employer pour l'objet virtuel, en fonction de l'angle de vue, et génération de la vue de l'objet virtuel dans la pose 3D ($\Phi$, $\Psi$) / 2D ($\Theta$, s) considérée,
- 560 : création d'un premier rendu en établissant un rendu en couches dans la position correcte conforme à la position de la zone de placement de l'objet dans la photo d'origine,
- 570 : obtention du rendu photoréaliste en ajoutant des calques dits calques sémantiques afin d'obtenir l'image finale.

Selon une mise en œuvre particulière du procédé, l'objet est une paire de lunettes et la zone de placement est le visage de l'utilisateur.

Dans ca cas, selon une mise en œuvre avantageuse, l'étape 510 utilise un premier algorithme de dopage *AD1* entraîné pour déterminer si la photo d'origine contient un visage.

Dans une mise en œuvre particulière du procédé tel qu'exposé, l'étape 530 consiste :

- à déterminer une similitude $\beta$, à appliquer à une photo d'origine, pour obtenir un visage, similaire à un visage de référence en grossissement et en orientation, et
- à déterminer la position du coin extérieur précis A et du point intérieur précis B pour chaque œil dans le visage de la photo d'origine.

Plus particulièrement, dans ce cas, l'étape 530 utilise avantageusement un algorithme itératif qui permet d'affiner la valeur de la similitude $\beta$ et les positions des points caractéristiques :

- définition de premiers paramètres de similitude $\beta_0 = (tx_0, ty_0, s_0, \Theta_0)$,
- caractérisation des yeux sur la photo d'origine 1 de l'utilisateur, parmi un ensemble prédéfini de modèles d'yeux $BD_{modèles\_yeux}$ et évaluation de l'échelle,
- réévaluation des paramètres de la similitude $\beta_1 = (tx_1, ty_1, s_1, \Theta_1)$.

Selon une mise en œuvre particulière du procédé, l'étape 530 utilise un second algorithme de dopage entrainé avec une base d'apprentissage d'yeux, constituée d'un ensemble d'exemples positifs d'yeux et d'un ensemble d'exemples négatifs d'yeux.

Dans une mise en œuvre particulière du procédé tel qu'exposé, l'étape 550 consiste :

- 1/ à déterminer un modèle géométrique simplifié du modèle de paire de lunettes réelles, ledit modèle étant constitué d'un nombre prédéterminé N de faces et de leur normales en prenant comme orientation de ces normales, l'extérieur de l'enveloppe convexe à la paire de lunettes réelle,
- 2/ à lui appliquer, parmi un ensemble prédéterminé d'orientations de référence, une orientation la plus proche des angles Φ et Ψ,
- 3/ à calculer une texture du modèle géométrique simplifié, positionné dans l'orientation 3D de l'orientation de référence la plus proche des angles Φ et Ψ, en utilisant la texture de cette orientation de référence, ce qui revient à texturer chacune des N faces du modèle géométrique simplifié tout en classifiant la face dans la vue en cours en trois classes : face interne de la monture, face externe de la monture, verre.

Dans ce cas, selon une mise en œuvre plus particulière, le modèle géométrique simplifié d'une paire de lunettes réelle, constituée d'une monture et de verres, est obtenu dans une phase 100 dans laquelle :

- on réalise un ensemble de prise de vues de la paire de lunettes réelles à modéliser, avec des angles de vues différents et en utilisant différents fonds d'écran avec et sans la paire de lunettes réelles,
- on construit le modèle géométrique simplifié, constitué d'un nombre N de faces $face_j$ et de leur normale $\vec{n_j}$ en partant d'un maillage surfacique peu dense, et en utilisant un algorithme d'optimisation qui déforme le maillage du modèle de sorte que les projections de sa silhouette dans chacune des vues correspondent au mieux aux silhouettes détectées dans les images.

Selon un mode de réalisation avantageux, le nombre N de faces du modèle géométrique simplifié, est une valeur proche de vingt.

Selon une mise en œuvre particulière du procédé, la phase 100 comprend également une étape 110 consistant à obtenir des images de la paire de lunettes réelles, le verre devant correspondre au verre destiné à l'essayage 500, et à ce que lors de cette étape 110 :

- on photographie en haute résolution la paire de lunettes réelle 4 selon V orientations de référence $Orientation^i$ différentes et ceci dans N configurations lumineuses révélant la transmission et la réflexion du verre de lunettes,
- on choisit ces orientations de référence en discrétisant un spectre d'orientations correspondant aux orientations possibles lors d'un essayage de lunettes,
- on obtient V*N images haute résolution notées $Image\text{-}lunettes^{i,j}$ de la paire de lunettes réelle.

Dans ce cas, selon une mise en œuvre particulière, le nombre V d'orientations de références est égal à neuf, et en ce que si on définit un repère orthogonal d'axes x, y, z, l'axe y correspondant à l'axe vertical, Ψ l'angle de rotation autour de l'axe x, Φ l'angle de rotation autour de l'axe y, les V positions $Orientation^i$ choisies sont telles que l'angle Ψ prend sensiblement les valeurs respectives -16°, 0° ou 16°, l'angle Φ prend les valeurs respectives -16°, 0° ou 16°.

Selon une mise en œuvre particulière du procédé :

- la première configuration lumineuse respecte les couleurs et matières de la paire de lunettes réelle en utilisant des conditions de luminosité neutres, les V images haute résolution de transmission $Transmission^i$ crées dans cette configuration lumineuse permettant de révéler la transmission maximale de la lumière à travers les verres,
- la seconde configuration lumineuse met en évidence les particularités géométriques de la paire de lunettes réelle (4), en utilisant des conditions de réflexions intenses, les V images haute résolution de réflexion $Réflexion^i$ obtenues dans cette seconde configuration lumineuse révélant les qualités physiques de réflexion du verre.

Selon une mise en œuvre particulière du procédé, la phase 100 comprend une étape 120 de création d'un calque de texture de la monture $Monture^i$, pour chacune des V orientations de référence.

Dans ce cas, plus particulièrement, dans cette étape 120 :

- on prend pour chacune des V orientations de référence, l'image haute résolution de réflexion $Réflexion^i$,
- on génère une image binaire de même résolution que l'image haute résolution de réflexion des orientations de référence, ladite image binaire étant appelée silhouette du verre $Verre^i_{binaire}$. dans cette silhouette du verre $Verre^i_{binaire}$, la valeur du pixel étant égal à un, si le pixel représente les verres, et à zéro dans le cas contraire.

Encore plus particulièrement, l'extraction de la forme des verres nécessaire pour générer la silhouette du verre $Verre^i_{binaire}$ se fait en utilisant un algorithme de contours actifs reposant sur le postulat que la monture et les verres ont des transparences différentes.

Selon une mise en œuvre avantageuse, dans l'étape 120 :

- on génère un calque de verre $Verre^i_{calque}$ pour chacune des orientations de référence, en copiant pour chaque pixel de valeur égale à un dans le calque binaire du verre $Verre^i_{binaire}$, l'information contenue dans l'image haute résolution de réflexion et en attribuant la valeur zéro aux autres pixels,
  ce calque de verre $Verre^i_{calque}$ est une image haute définition détourée du verre, utilisant, pour le détourage de l'image haute définition d'origine, la silhouette du verre $Verre^i_{binaire}$.
- on choisit pour chacune des orientations de référence l'image haute résolution de réflexion $Réflexion^i$ associée, et on génère une image binaire fond $Fond^i_{binaire}$ par extraction automatique du fond,
- on génère une image binaire calque binaire de monture $Monture^i_{binaire}$, en déduisant d'une image neutre l'image en ombre chinoise des verres et l'image en ombre chinoise du fond,
- on génère un calque de texture de la monture derrière le verre $Monture^i_{derrière\_verre}$, de la texture de la monture correspondant à la partie de la monture située derrière les verres, pour chacune des orientations de référence en copiant, pour chaque pixel de valeur égal à un dans le calque binaire verre $Verre^i_{binaire}$, l'information contenue dans l'image haute résolution de transmission $Transmission^i$, et en attribuant la valeur zéro aux autres pixels,
- on génère un calque de texture de la monture à l'extérieur du verre $Monture^i_{extérieur\_verre}$ en copiant, pour chaque pixel de valeur égal à un dans le calque binaire monture $Monture^i_{binaire}$ l'information contenue dans l'image haute résolution de réflexion, et en attribuant la valeur zéro aux autres pixels,
- on définit un calque de la texture de la monture $Monture^i$ comme la somme du calque de la texture de la monture derrière le verre $Monture^i_{derrière\_verre}$ et du calque de la texture de la monture à l'extérieur du verre $Monture^i_{extérieur\_verre}$.

Selon une mise en œuvre particulière, dans l'étape 550, le calcul de texture se fait en utilisant des calques associés à l'orientation de référence la plus proche des angles $\Phi$ et $\Psi$, par les sous-étapes suivantes :

- inversion des normales $\vec{n}_j$ de chacune des faces de la paire de lunettes modélisée $face_j$ et projection du calque monture $Monture^i$, restreint à l'espace verre de l'orientation de référence la plus proche des angles $\Phi$ et $\Psi$ pour obtenir un calque de texture de face interne de monture $TextureMonture^i_{face\_interne}$. qui permet de structurer les branches de la monture, vues à travers le verre dans un modèle texturé de référence orienté selon l'orientation de référence la plus proche des angles $\Phi$ et $\Psi$,
- projection du calque monture $Monture^i$, restreint à l'espace hors verre de l'orientation de référence la plus proche des angles $\Phi$ et $\Psi$ pour obtenir un calque de texture de face externe de monture $TextureMonture^i_{face\_externe}$ qui permet de structurer les faces extérieures au verre de la monture, dans le modèle texturé de référence, orienté selon l'orientation de référence la plus proche des angles $\Phi$ et $\Psi$,
- projection du calque verre restreinte au verre pour obtenir un calque de texture de verre $TextureVerre^i$ qui permet de structurer le verre, dans le modèle texturé de référence, orienté selon l'orientation de référence, la plus proche des angles $\Phi$ et $\Psi$.

Selon une mise en œuvre particulière du procédé tel qu'exposé, l'étape 560 consiste à générer un modèle texturé orienté, orienté selon les angles $\Phi$ et $\Psi$ et selon l'échelle et l'orientation de la photo d'origine à partir d'un modèle texturé de référence, orienté selon l'orientation de référence, la plus proche des angles $\Phi$ et $\Psi$, et des paramètres de la similitude $\beta$, et en ce que cette étape comporte des sous-étapes suivantes :

- utilisation d'une interpolation affine bilinéaire pour orienter un modèle texturé interpolé selon les angles $\Phi$ et $\Psi$ à partir du modèle texturé de référence orienté selon l'orientation de référence la plus proche de ces angles $\Phi$ et $\Psi$,
- utilisation de la similitude $\beta$ à appliquer, afin d'obtenir la même échelle, la même orientation image et le même centrage que la photo d'origine, produisant alors un modèle texturé orienté.

Dans ce cas, plus particulièrement, l'étape 560 comporte également une sous-étape d'écartement géométrique des branches des lunettes virtuelles selon la morphologie du visage de la photo d'origine, pour obtenir un calque lunette *Lunettes_{calque}* de la paire de lunettes virtuelle et un calque binaire *Lunettes_{carque_binaire}*, orientés comme la photo d'origine, et qui peuvent donc lui être superposés.

Selon une mise en œuvre particulière du procédé tel qu'exposé, l'étape 570 consiste à prendre en compte les interactions lumineuses dues au port des lunettes virtuelles, notamment les ombres portées sur le visage, la visibilité de la peau à travers le verre des lunettes, la réflexion de l'environnement sur les lunettes.

Selon une mise en œuvre plus particulière, l'étape 570 comporte des sous-étapes suivantes :

- 1/ création d'une carte d'ombre *Visibilité^i* pour chacune des orientations de référence, obtenue en calculant l'occultation lumineuse produite par la paire de lunettes réelle sur chaque zone du visage moyen lorsqu'on éclaire l'ensemble par une source de lumière, ladite source de lumière étant modélisée par un ensemble de sources ponctuelles émettant dans toutes les directions, situées à intervalles réguliers dans un rectangle,
- 2/ multiplication de la carte d'ombre et de la photo pour obtenir un calque photo ombrée noté *L_{peau_Ombrée}*,
- 3/ mélange du calque photo ombrée *L_{peau_Ombrée}* et du calque lunette *Lunettes_{calque}* par interpolation linéaire, entre eux, dépendante du coefficient d'opacité $\alpha$ du verre dans une zone limitée au calque binaire *Lunettes_{calque_binaire}* de la paire de lunettes virtuelle, pour obtenir une image finale, qui est une image de la photo d'origine sur laquelle est superposée une image du modèle de lunette choisi, orientée comme la photo d'origine, et dotée de propriétés d'ombres

Selon une mise en œuvre particulière, le procédé tel qu'exposé comprend en outre une phase 200 de création d'une base de données de modèles d'yeux *BD_{modèles_yeux}*, comprenant une pluralité de photographies de visages dites photographies d'apprentissage *App_{yeux}^k*

Dans ce cas, plus particulièrement, la phase 200, comporte avantageusement des étapes suivantes :

- étape 210, de définition d'une forme et une orientation de visage de référence en fixant une distance inter-pupillaire de référence *di_0*, en centrant le segment inter-pupillaire sur le centre de l'image et en orientant ce segment inter-pupillaire parallèlement à l'axe horizontal de l'image,
- puis, pour toute k^{ième} photographie d'apprentissage *App_{yeux}^k* non encore traitée :

  - étape 230, de détermination de la position précise de points caractéristiques : point extérieur $B_g^k$, $B_d^k$, et point intérieur $A_g^k$, $A_d^k$ de chaque œil et de détermination du centre géométrique $G_g^k$, $G_d^k$ respectif de ces yeux, et de la distance inter pupillaire $di^k$,
  - étape 231, de transformation de cette k^{ième} photographie d'apprentissage *App_{yeux}^k* en une image en niveaux de gris *App_{yeux-gris}^k*, et de normalisation de l'image en niveau de gris en appliquant une similitude $S^k(tx, ty, s, \Theta)$ afin de retrouver l'orientation et l'échelle du visage de référence (7) pour obtenir une k^{ième} photographie d'apprentissage normalisée en niveaux de gris *App_{yeux_gris_norm}^k*,
  - étape 232, de définition d'une fenêtre de dimensions fixes pour chacun des deux yeux, dans la k^{ième} photographie d'apprentissage normalisée *App_{yeux_gris_norm}^k* en niveaux de gris : patch gauche $P_g^k$ et patch droit $P_d^k$, la position d'un patch *P* étant définie par la distance fixe $\Delta$ entre le point extérieur de l'œil B et le bord du patch *P* le plus proche de ce point extérieur de l'œil B
  - étape 233, pour chacun des deux patchs $P_g^k$, $P_d^k$ associés à la k^{ième} photographie d'apprentissage normalisée *App_{yeux_gris_norm}^k* en niveaux de gris, de normalisation les niveaux de gris,
  - étape 234, pour la première photographie d'apprentissage *App_{yeux}^1*, de mémorisation de chacun des patchs $P_g^1$, $P_d^1$ appelés patchs descripteurs, dans la base de données d'yeux *BD_{modèles_yeux}*,
  - étape 235, pour chacun des patchs P associés à la k^{ième} photographie d'apprentissage normalisée *App_{yeux_gris_norm}^k* en niveaux de gris, de corrélation du vecteur-colonne texture normalisé correspondant *T0* avec chacun des vecteurs-colonne texture normalisés *T0_i* de patchs descripteurs correspondants,
  - étape 236, de comparaison, pour chacun des patchs $P_g^k$, $P_d^k$, de cette mesure de corrélation avec un seuil de corrélation préalablement défini *seuil*, et, si la corrélation est inférieure au seuil, de mémorisation de patch *P* comme patchs descripteur dans la base de données d'yeux *BD_{modèles_yeux}*.

Selon une mise en œuvre particulière, dans ce cas, dans l'étape 232, la distance fixe $\Delta$ est choisie afin qu'aucune texture extérieure au visage ne soit incluse dans le patch *P*, et la largeur l et la hauteur h des patchs $P_g^k$, $P_d^k$ sont constantes et prédéfinies, afin que le patch *P* contienne l'œil correspondant à ce patch *P* en entier, et ne contienne aucune texture qui soit extérieure au visage, et ceci quelle que soit la photographie d'apprentissage *App_{yeux}^k*.

L'invention vise sous un autre aspect un produit programme d'ordinateur comprenant des instructions de code de programme pour l'exécution des étapes d'un procédé tel qu'exposé, lorsque ledit programme est exécuté sur un ordinateur.

**Brève description des figures**

La description qui va suivre, donnée uniquement à titre d'exemple d'un mode de réalisation de l'invention, est faite en se référant aux figures annexées dans lesquelles :

la figure 1a représente une paire de lunettes de sport enveloppante,

la figure 1b représente un maillage initial utilisé pour représenter une paire de lunettes réelles,

la figure 1c illustre la définition de la normale à la surface en un segment $V_i^+$ $V_i$,

la figure 1d représente un modèle simplifié pour une paire de lunettes de sport enveloppante,

la figure 2 illustre le principe de prise de vue d'une paire de lunettes réelle pour modélisation,

la figure 3 schématise l'étape d'obtention d'un modèle géométrique simplifié,

la figure 4 représente les neuf prises de vues d'un paire de lunette,

la figure 5 schématise l'étape d'obtention d'images de la paire de lunettes réelle,

la figure 6 schématise l'étape de génération de calques des lunettes,

les figures 7a et 7b illustrent la création d'une carte d'ombre sur un visage moyen,

la figure 8 schématise le passage entre une photographie d'apprentissage et une photographie d'apprentissage normalisée en niveaux de gris,

la figure 9 schématise la construction de l'image finale.

**Description détaillée d'un mode de mise en œuvre de l'invention**

Le procédé comprend ici cinq phases :

la première phase 100 est un procédé de modélisation de paires de lunettes réelles permettant d'alimenter une **base de données lunettes** $BD_{modèles\_lunettes}$ de modèles virtuels de paires de lunettes,
la deuxième phase 200 est un procédé de création d'une **base de données de modèles d'yeux** $BD_{modèles\_yeux}$,
la troisième phase 300 est un procédé de recherche de critères de reconnaissance d'un visage dans une photo.
la quatrième phase 400 est un procédé de recherche de critères de reconnaissance de points caractéristiques dans un visage.
la cinquième phase 500 dite d'essayage de lunettes virtuelles, est un procédé de génération d'une image finale 5, à partir d'un modèle virtuel 3 de paire de lunettes, et d'une photo d'origine 1 d'un sujet, prise, dans le présent exemple, par une caméra et représentant le visage 2 du sujet.

Les quatre premières phases 100, 200, 300, 400 sont réalisées de façon préliminaire, alors que la phase d'essayage de lunettes virtuelles 500 est mise en œuvre de nombreuses fois, sur différents sujets et différentes paires de lunettes virtuelles, sur la base des résultats des quatre phases préliminaires.

**Phase 100 de modélisation de lunettes**

On décrit dans un premier temps la première phase 100, de modélisation de lunettes :
Le but de cette phase de modélisation de lunettes est de modéliser une paire de lunettes réelle 4, géométriquement et en texture. Les données calculées par cet algorithme de modélisation de lunettes, pour chacune des paires de lunettes mises à disposition lors de la phase d'essayage 500, sont stockées dans une base de données $BD_{modèles\_lunettes}$ afin d'être disponibles lors de cet phase d'essayage.
Cette phase 100 de modélisation de lunettes se décompose en quatre étapes.

**Etape 110 : obtention d'images de la paire de lunettes réelle 4**

La procédure de construction d'un modèle géométrique simplifié 6 d'une paire de lunettes réelle 4, utilise une machine de prise de vues 50.

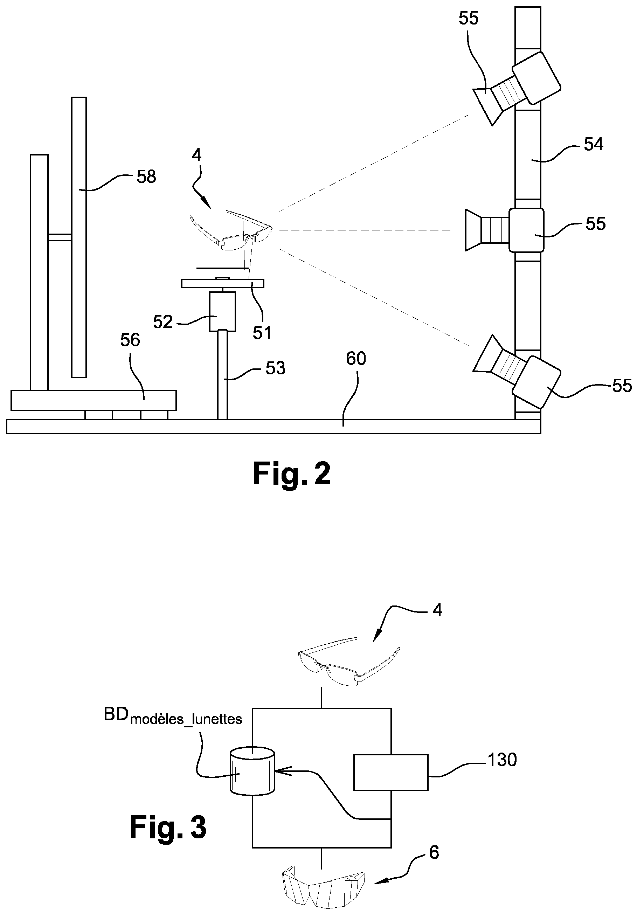

Cette machine de prise de vue 50 est, dans le présent exemple, représentée sur la figure 2 et est constituée :

- d'un support 51 qui permet de soutenir la paire de lunettes réelles 4 à modéliser. Ce support 51 est constitué d'une matière transparente telle que du plexiglas transparent. Ce support 51 est formé de deux pièces 51a et 51b qui s'emboitent. La pièce 51b est la partie du support 51 qui est en contact avec la paire de lunettes réelles 4, lorsque celle-ci est posée sur le support 51. La pièce 51b est amovible par rapport à la pièce 51a et peut donc être choisie parmi un ensemble de pièces, de forme optimisée par rapport à la forme de l'objet à poser (lunettes, masques, bijoux). Les points de contact de la pièce 51b avec la paire de lunettes réelles 4 sont au nombre de trois et correspondent aux points de contact réels, lorsque la paire de lunettes réelles 4 est portée sur un visage, c'est à dire aux deux oreilles ainsi qu'au nez.
- d'un plateau tournant 52 sur lequel la partie 51a du support 51 est fixée, ledit plateau tournant 52 étant posé sur un pied 53, le dit plateau tournant 52 permettant d'assurer une rotation du support amovible selon un axe de rotation vertical Z.
- d'un rail vertical 54 permettant de fixer des appareils photographiques numériques 55 à différentes hauteurs (les appareils photographiques numériques 55 sont en nombre variable, de un à huit dans le présent exemple). Les appareils photographiques numériques 55 sont fixés respectivement sur le rail vertical 54 par une rotule autorisant les rotations en tangage et en lacet. Ce dit rail vertical 54 est positionné à une distance du pied 53, qui est dans le présent exemple fixe. Les appareils étant orientés de telle sorte que leur champ photographique respectif contienne la paire de lunettes réelles 4 à modéliser, lorsqu'elle est posée sur la pièce 51b du support 51, la pièce 51b étant emboitée sur la pièce 51a.
- d'un rail horizontal 56 solidaire d'un support vertical sur lequel est attaché un écran 58 de couleur de fond modifiable 59. Dans le présent exemple, l'écran 58 est un écran LCD. La couleur de fond 59 est choisie dans le présent exemple parmi les couleurs rouge, bleu, vert, blanc ou neutre c'est à dire d'un gris contenant les trois couleurs rouge, vert, bleu en répartition uniforme de valeur deux cents par exemple. Ledit rail horizontal 56 étant positionné tel que la paire de lunettes réelles 4 à modéliser posée sur la pièce 51b emboitée sur la pièce 51a fixée sur le plateau tournant 52, est entre l'écran 58 et le rail vertical 54.
- d'une plaque de base éventuelle 60 supportant le rail vertical 54, le pied 53 et le rail horizontal 56.

La machine de prise de vue 50 est pilotée par une électronique associée à un logiciel 61. Ce pilotage consiste à gérer la position et l'orientation des appareils photographiques numériques 55, par rapport à l'objet à photographier supposé fixe, à gérer la couleur de fond 59 de l'écran 58 ainsi que sa position et à gérer la rotation plateau tournant 52.

La machine de prise de vue 50 est calibrée par des procédures classiques de calibration afin de connaître avec précision les positions géométriques de chacun des appareils photographiques 55 et la position de l'axe de rotation vertical Z.

Dans le présent exemple, la calibration de la machine de prise de vue 50 consiste :

- dans un premier temps, à placer un des appareils photographiques numériques 55 avec une précision suffisante à la hauteur de la paire de lunettes réelles 4 à modéliser, afin que sa prise de vue respective soit de face,
- dans un deuxième temps, à enlever la paire de lunettes réelles 4 et éventuellement la pièce amovible 51b, et à poser verticalement sur le plateau tournant 52 une mire 57, non nécessairement plane. Cette mire 57 est, dans le présent exemple nullement limitatif, constituée d'un damier.
- dans un troisième temps à déterminer la position précise de chacun des appareils photographiques numériques 55 par un procédé classique, en utilisant des images 62 obtenues pour chacun des appareils photographiques numériques 55, avec différentes prises de vue de la mire 57, en utilisant les différents fonds d'écran 59.
- dans un quatrième temps, à déterminer la position de l'axe de rotation vertical Z du plateau tournant 52 en utilisant les images 62.

La première étape 110 de la phase de modélisation de lunettes consiste à obtenir des images de la paire de lunettes réelles 4 selon plusieurs orientations (en gardant préférentiellement une distance constante entre l'appareil de prise de vue et l'objet à photographier), et plusieurs éclairages. Dans cette étape 110, le verre 4b doit correspondre au verre destiné à la phase d'essayage 500.

On photographie en haute résolution (typiquement une résolution supérieure à 1000 x 1000) la paire de lunettes réelle 4 selon neuf (plus généralement V) orientations différentes et ceci dans N configurations lumineuses révélant la transmission et la réflexion du verre de lunettes 4b avec une caméra.

Ces neuf (V) orientations sont appelées **orientations de référence** et notées dans la suite de la description

*Orientation$^i$*. On choisit ces V orientations de référence *Orientation$^i$* en discrétisant un spectre d'orientations correspondant aux orientations possibles lors d'un essayage de lunettes. On obtient donc V*N images haute résolution notées *Image-lunettes$^{i,j}$* ($1 \le i \le V$, $1 \le j \le N$) de la paire de lunettes réelle 4.

Dans le présent exemple, le nombre V d'orientations de références *Orientation$^i$* est égal à neuf, c'est-à-dire un nombre relativement faible d'orientations pour en déduire une géométrie 3D du modèle. Il est cependant clair que d'autres nombres d'orientations peuvent être envisagés sans modification substantielle du procédé selon l'invention.

Si on définit un repère orthogonal d'axes x, y, z, l'axe y correspondant à l'axe vertical, $\Psi$ l'angle de rotation autour de l'axe x, $\Phi$ l'angle de rotation autour de l'axe y, les neuf positions *Orientation$^i$* choisies ici (définies par le couple $\Phi, \psi$) sont telles que l'angle $\Psi$ prend les valeurs respectives -16°, 0° ou 16°, l'angle $\Phi$ prend les valeurs respectives - 16°, 0° ou 16°.

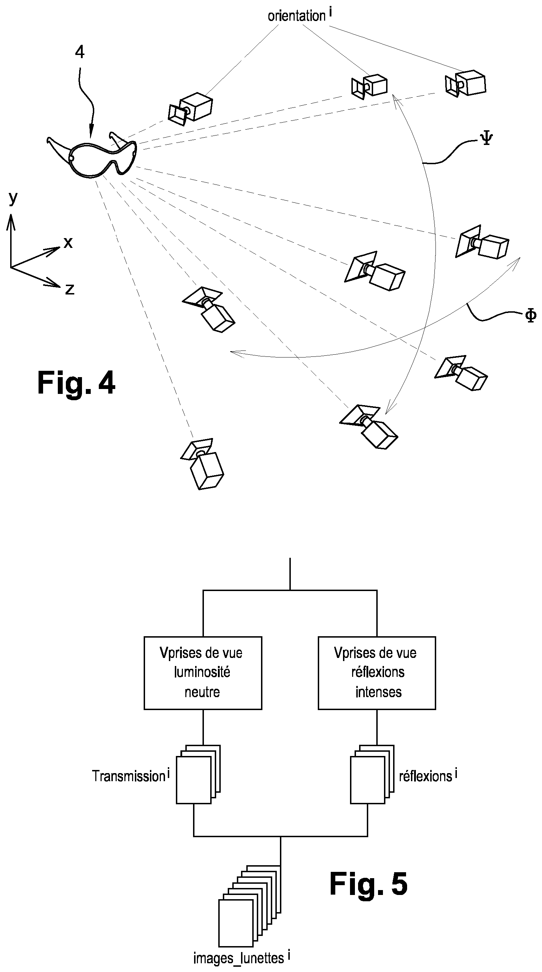

La figure 4 représente une paire de lunettes réelle 4 et les neuf orientations *Orientation$^i$* de prise de vue.

Dans le présent exemple de mise en œuvre du procédé, on choisit deux configurations lumineuses, soit N=2. En choisissant neuf positions de caméra (correspondant aux orientations de référence *Orientation$^i$*) soit V=9 et deux configurations lumineuses N=2, on obtient donc dix-huit images haute résolution *Image-lunettes$^{i,j}$* représentant une paire de lunettes réelle 4, ces dix-huit images haute résolution *Image-lunettes$^{i,i}$* correspondent aux neuf orientations *Orientation$^i$* dans les deux configurations lumineuses.

La première configuration lumineuse respecte les couleurs et matières de la paire de lunettes réelle 4. On utilise des conditions de luminosité neutres pour cette première configuration lumineuse. Les neuf (et plus généralement V) images *Image-lunettes$^{i,1}$* créées dans cette configuration lumineuse permettent de révéler la transmission maximale de la lumière à travers les verres 4b (il n'y a pas de réflexion sur le verre et on peut voir les branches de lunettes au travers des verres). Elles sont appelées **images haute résolution de transmission** et notées dans la suite de la description *Transmission$^i$*, l'exposant i permettant de caractériser la i$^{éme}$ vue, i variant de 1 à V.

La deuxième configuration lumineuse met en évidence les particularités géométriques de la paire de lunettes réelle 4, comme par exemple les chanfreins. Cette deuxième configuration lumineuse est prise dans des conditions de réflexions intenses.

Les images haute résolution *Image-lunettes$^{i,2}$* obtenues dans cette seconde configuration lumineuse révèlent les qualités physiques de réflexion du verre 4b (on ne voit pas les branches derrière les verres mais les réflexions de l'environnement sur le verre, la transmission est minimale). Les neuf (ou V) images haute résolution de la paire de lunettes réelle 4, créés dans cette seconde configuration lumineuse sont appelées **images haute résolution de réflexion** et notées dans la suite de la description *Réflexion$^i$*, l'exposant i permettant de caractériser la i$^{éme}$ vue, i variant de 1 à V.

Selon le procédé qui vient d'être décrit, l'ensemble des images haute résolution *Image-lunettes$^{i,j}$* des paires de lunettes réelles est par définition constitué de la réunion des images hautes résolution de transmission *Transmission$^i$* et des images hautes résolution en réflexion *Réflexion'*. L'obtention de l'ensemble des images haute résolution *Image-lunettes$^{i,i}$* par cette étape 110 est illustrée figure 5.

## Etape 120 : génération de calques des lunettes

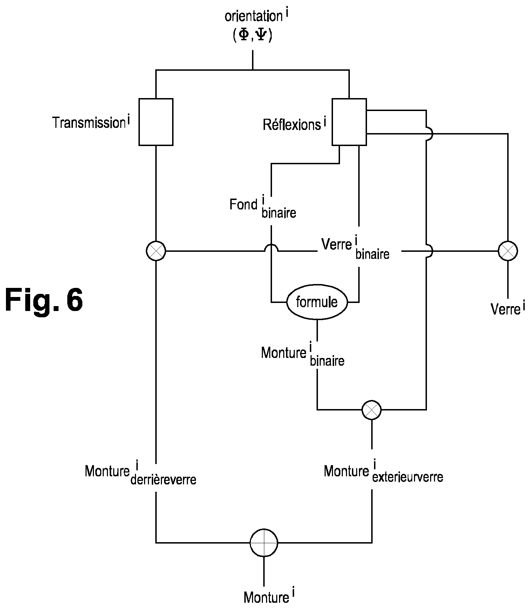

La deuxième étape 120 de la phase 100 de modélisation de lunettes consiste à générer des calques, pour chacune des neuf orientations de référence *Orientation$^i$*. Cette seconde étape 120 est schématisée par la figure 6. On comprend qu'un calque est ici défini dans le sens connu de l'homme de l'art en traitement d'images. Un calque est une image matricielle de la même dimension que l'image dont il est dérivé.

On prend pour chacune des neuf (et plus généralement V) orientations de référence *Orientation$^i$*, l'image haute résolution de réflexion *Réflexion'*. On génère alors une image binaire de même résolution que l'image haute résolution de réflexion des orientations de référence. Cette image binaire donne en fait la forme «en ombre chinoise» des verres 4b de la paire de lunettes réelle 4. Cette image binaire est appelée **silhouette du verre** et notée *Verre$^i_{binaire}$*.

L'extraction de la forme des verres nécessaire pour générer la silhouette du verre se fait par un algorithme de contours actifs (par exemple de type connu de l'homme de l'art sous le nom de « snake 2D ») reposant sur le postulat que la monture 4a et les verres 4b ont des transparences différentes. Le principe de cet algorithme, connu en soi, consiste à déformer une courbe ayant plusieurs contraintes de déformation. A la fin de la déformation, la courbe optimisée épouse la forme du verre 4b.

La courbe à déformer est définie comme un ensemble de points 2D classés sur une ligne. Le k$^{iéme}$ point de la courbe associée à la coordonnée *xk* dans l'image haute résolution en réflexion *Réflexion$^i$* associée à une orientation de référence en cours, possède une énergie E(k). Cette énergie E(k) est la somme d'une énergie interne $E_{interne}(k)$ et d'une énergie externe $E_{externe}(k)$. L'énergie externe $E_{externe}(k)$ dépend de l'image haute résolution de réflexion *Réflexion$^i$* associée à une orientation de référence en cours tandis que l'énergie interne $E_{interne}(k)$ dépend de la forme de la courbe. On a donc $E_{externe}(k) = \nabla(xk)$, où V est le gradient de l'image haute résolution de réflexion *Réflexion$^i$* associée à une orientation de référence en cours. L'énergie interne $E_{interne}(k)$ est la somme d'une énergie dite de « ballon » $E_{ballon}(k)$, et d'une énergie de courbure $E_{courbure}(k)$ On a donc $E_{interne}(k) = E_{ballon}(k) + E_{courbure}(k)$

Les énergies de ballon $E_{ballon}(k)$ et les énergies de courbure $E_{courbure}(k)$ sont calculées à l'aide de formules classiques dans le domaine des méthodes de contours actifs, telles que la méthode connue sous le nom de Snake.

Dans cette silhouette du verre $Verre^i_{binaire}$, la valeur du pixel est égal à un, si le pixel représente les verres 4b, et à zéro dans le cas contraire (ce qui forme en fait, en d'autres termes une image en ombre chinoise).

On comprend qu'il est possible également d'utiliser des niveaux de gris (valeurs comprises entre 0 et 1) à la place de niveaux binaires (valeurs égales à 0 ou 1) pour réaliser un tel calque de verre (par exemple en créant une transition progressive entre les valeurs 0 et 1 de part et d'autre de la courbe optimisée obtenue par le procédé de contours actifs décrit plus haut).

On génère ensuite **un calque de verre** noté $Verre^i_{calque}$ pour chacune des neuf (V) orientations de référence en copiant pour chaque pixel de valeur égale à un dans la silhouette du verre $Verre^i_{binaire}$, l'information contenue dans l'image haute résolution de réflexion $Réflexion^i$ et en attribuant la valeur zéro aux autres pixels. L'exposant i des variables $Verre^i_{binaire}$ et $Verre^i_{calque}$ varie de 1 à V, V étant le nombre d'orientations de référence.

Ce calque de verre $Verre^i_{calque}$ est, en quelque sorte, une image haute définition détourée du verre, en utilisant, pour le détourage de l'image haute définition d'origine, la silhouette du verre $Verre^i_{binaire}$ (forme en ombre chinoise) créée précédemment.

En notant $\otimes$ l'opérateur de produit de matrice terme à terme, on a :

$$Verre^i_{calque} = Verre^i_{binaire} \otimes Réflexion^i \qquad \text{(Eq 1)}$$

C'est à dire, pour un pixel de position x, y

$$Verre^i_{calque}(x, y) = Verre^i_{binaire}(x, y) \times Réflexion^i(x, y)$$

On choisit pour chacune des orientations de référence l'image haute résolution de réflexion $Réflexion^i$ associée, et on génère alors, pour chacune d'entre elles, une **image binaire fond** $Fond^i_{binaire}$ par extraction automatique du fond, en utilisant par exemple un algorithme classique d'extraction de fond d'images. Une image binaire nommée **calque binaire de monture** $Monture^i_{binaire}$ pour chacune des V orientations de référence est alors générée, en déduisant d'une image neutre l'image en ombre chinoise des verres et l'image en ombre chinoise du fond, c'est à dire plus mathématiquement, en appliquant la formule :

$$Monture^i_{binaire} = 1 - (Verre^i_{binaire} + Fond^i_{binaire}) \qquad \text{(Eq 2)}$$

On génère ensuite un calque dit **calque de texture de la monture derrière le verre** $Monture^i_{derrière\_verre}$, de la texture de la monture correspondant à la partie de la monture située derrière les verres 4b (par exemple une partie des branches peut être visible derrière les verres 4b selon l'orientation), pour chacune des neuf (V) orientations de référence en copiant pour chaque pixel de valeur égal à un dans le calque binaire verre $Verre^i_{binaire}$, l'information contenue dans l'image haute résolution de transmission $Transmission'$ et en attribuant la valeur zéro aux autres pixels.

On a:

$$Monture^i_{derrière\_verre} = Verre^i_{binaire} \otimes Transmission^i \qquad \text{(Eq 3)}$$

C'est à dire pour un pixel de position x, y :

$$Monture^i_{derrière\_verre}(x, y) = Verre^i_{binaire}(x, y) \times Transmission^i(x, y)$$

On génère de même un calque dit **calque de texture de la monture à l'extérieur du verre** $Monture^i_{extérieur\_verre}$ pour chacune des neuf (V) orientations de référence, en copiant pour chaque pixel de valeur égal à un dans le calque binaire monture $Monture^i_{binaire}$ l'information contenue dans l'image haute résolution de réflexion $Réflexion^i$ et en attribuant la valeur zéro aux autres pixels.

L'exposant i des variables $Monture^i_{binaire}$, $Fond^i_{binaire}$, $Monture^i_{extérieur\_verre}$ et $Monture^i_{derrière\_verre}$ varie de 1 à V, V étant le nombre d'orientations de référence $Orientation^i$.

On a :

$$Monture^i_{extérieur\_verre} = Monture^i_{binaire} \otimes Réflexion^i \qquad \text{(Eq 4)}$$

Un calque de la texture de la monture *Monture^i* est défini comme la somme du calque de la texture de la monture derrière le verre *Monture^i_{derrière_verre}* et du calque de la texture de la monture à l'extérieur du verre *Monture^i_{extérieur_verre}*.

On a :

$$Monture^i = Monture^i_{derrière\_verre} + Monture^i_{extérieur\_verre} \qquad (Eq\ 5)$$

**Etape 130** : **Modèle géométrique**

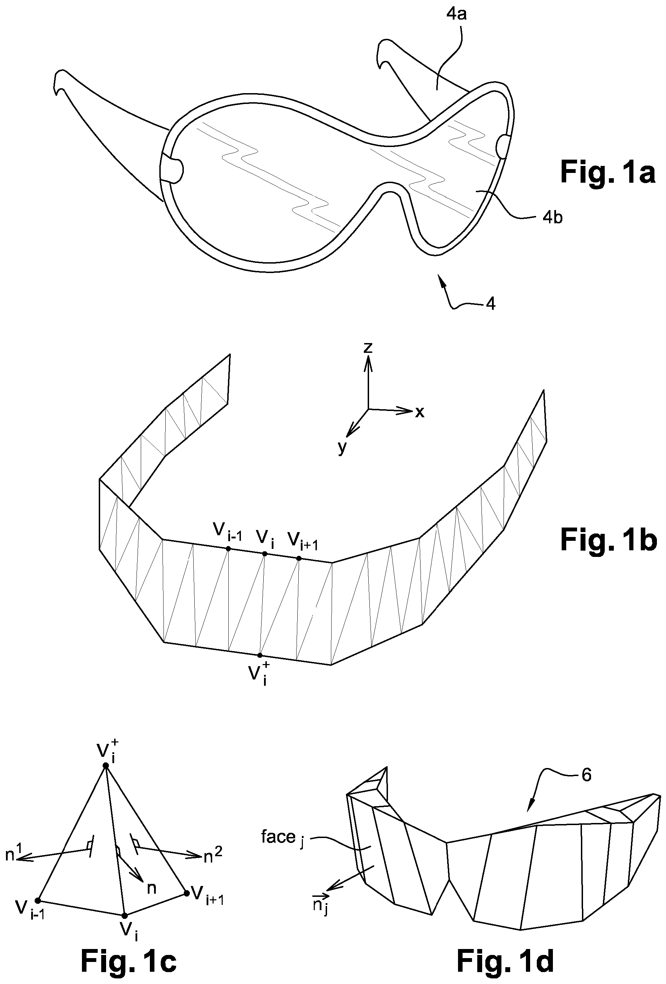

La troisième étape 130, de la phase 100 de modélisation de lunettes, consiste à obtenir un modèle géométrique simplifié 6 d'une paire de lunettes réelle 4. Une paire de lunettes réelles 4 est constituée d'une monture 4a et de verres 4b (on regroupe dans la notion de verres 4b les deux verres montés sur la monture 4a). La paire de lunettes réelles 4 est représentée sur la figure 1a.

Dans cette étape 130, les caractéristiques de réflexion des verres 4b montés sur la monture 4a n'intervenant pas, la paire de lunettes réelle 4 peut être remplacée par une paire de lunettes constitué de la même monture 4a avec des verres quelconques 4b mais de même épaisseur et de même courbure.

Pour obtenir ce modèle géométrique simplifié 6, on peut :

- soit extraire sa définition (rayon de courbure de la monture, dimensions de cette monture) d'une **base de données** $BD_{modèles\_lunettes}$ de modèles géométriques associés à des paires de lunettes.
- soit, selon l'approche préférentielle, construire le modèle géométrique simplifié 6 à l'aide d'une procédure de construction. Le nouveau modèle géométrique 6, ainsi créé, est alors stocké dans une base de données de modèles $BD_{modèles\_lunettes}$.

Plusieurs méthodes sont possibles pour construire un modèle géométrique adapté à la méthode de rendu décrite dans l'étape 120. Une méthode possible est de générer un maillage 3d dense qui décrit de façon fidèle la forme de la paire et qui est extrait soit par des méthodes de reconstruction automatiques [C. Hernández, F. Schmitt and R. Cipolla, Silhouette Coherence for Camera Calibration under Circular Motion, IEEE Transactions on Pattern Analysis and Machine Intelligence, vol. 29, no. 2, pp. 343-349, Feb., 2007] soit en exploitant des modèles 3D déjà existants issues d'une modélisation manuelle par des logiciels de CAO (Conception Assistée par Ordinateur). Une deuxième méthode consiste à modéliser la paire de lunettes réelles 4 par un contour actif 3D lié à un maillage surfacique. Un algorithme d'optimisation déforme le modèle de sorte que les projections de sa **silhouette** dans chacune des vues correspondent au mieux aux silhouettes détectés dans les images (selon une procédure telle que décrite).

La paire de lunettes réelles 4 est modélisée par un maillage surfacique dense ou à nombre faible de facettes (connue classiquement sous le nom de "low polygon number" ou "LowPoly"). Cette dernière méthode est. La forme initiale sert à introduire un a priori de forme faible ; elle peut être générique ou bien choisie parmi une base de modèles en fonction de la paire à reconstruire. Dans ce qui suit, on décrira uniquement le cas d'un modèle géométrique simplifié (i.e. de type « low polygons »).

Le maillage comporte N sommets notés $V_i$. Le maillage a la forme d'une bandelette ("triangle strip" en langue anglo-saxonne), comme l'illustre la figure 1b. Par ailleurs on suppose que le nombre de sommets sur le contour supérieur du maillage est égal au nombre de sommets sur le contour inférieur du maillage, et que l'échantillonnage de ces deux contours est similaire. Ainsi on peut définir un sommet «opposé», $V_i^+$ pour chaque sommet $V_i$.

Indépendamment de la topologie réelle du maillage, on définit le voisinage $\mathcal{N}_i$ du sommet $V_i$ par

$$\mathcal{N}_i = \{\ V_{i+1};\ V_{i-1};\ V_i^+\ \}$$

Les sommets $V_{i+1}$ et $V_{i-1}$ sont les voisins de $V_i$ le long du contour du maillage. Le sommet $V_i^+$ correspond au sommet opposé à $V_i$, comme défini plus haut. Ce voisinage permet également de construire deux triangles $T_i^1$ et $T_i^2$ (voir figure 1c). Soient $n^1$ et $n^2$ leur normale respective. On définit la normale à la surface en le segment $V_i^+\ V_i$ (qui est une arête topologique ou non) par

$$n = \frac{n^1 + n^2}{\left\| n^1 + n^2 \right\|}$$

$$\text{(Eq 6)}$$

Pour faire évoluer le contour actif vers les données images, on associe au modèle 3D courant une énergie d'autant plus faible que les silhouettes projetées du modèle sont proches des contours dans les images. Chaque sommet est ensuite itérativement déplacé de sorte à minimiser cette énergie, jusqu'à convergence (c'est-à-dire lorsqu'aucun déplacement ne diminue plus l'énergie). On cherche par ailleurs à obtenir un modèle lisse, ce qui nous conduit à définir en chaque sommet une énergie interne ne dépendant pas des images. L'énergie associée au sommet $V_i$ est donnée par :

$$E_i = \lambda_d E_{d,i} + \lambda_r E_{r,i} + \lambda_c E_{c,i} + \lambda_o E_{o,i} \qquad \text{(Eq 7)}$$

Le terme $E_{d,i}$ est le terme d'attache aux données images, c'est-à-dire aux contours calculés dans les différentes vues. Les trois autres termes sont des termes de lissage qui ne dépendent pas des images.

Le terme $E_{r,i}$ est un terme de répulsion qui tend à repartir les sommets uniformément.

Le terme $E_{c,i}$ est un terme de courbure qui tend à rendre la surface lisse.

Enfin le terme $E_{o,i}$ est un terme d'obliquité visant à minimiser le décalage dans le plan (x; y) entre Vi et $V_i^+$

Les poids $\lambda_d,\ \lambda_r,\ \lambda_c,\ \lambda_o$ sont communs à tous les sommets et on a en général $\lambda_d \gg \lambda_r,\ \lambda_c,\ \lambda_o.$

Le terme d'attache aux données $E_{d,i}$ caractérise la proximité de la silhouette du contour actif courant avec les contours détectés dans les images (par une procédure de contour actif telle que décrite dans l'étape 120 plus haut). Dans le processus d'acquisition, une phase de détourage automatique de type connu en soi ("difference matting" en langue anglo-saxonne) fournit une carte d'opacité pour chaque vue.

Les contours sont obtenus en seuillant le gradient de cette carte d'opacité. L'information de contour est propagée à l'ensemble de l'image en calculant, pour chaque vue k, une carte de distance aux contours notée $D_k$. Le modèle de projection du modèle 3D dans les images est un modèle de caméra en trou d'épingle, de type connu en soi, défini par les éléments suivants :

- une matrice $K_k$ (matrice 3 x 3) contenant les paramètres internes de la caméra,
- une matrice $E_k = [R_k / t_k]$ (matrice 3 x 4) décrivant le passage du repère monde (tel que présenté en figure 1b) au repère de la caméra de la vue k.

On note $\Psi_k(x;\ y;\ z) = \left( \dfrac{u}{w}, \dfrac{v}{w} \right)^T$ la projection du point 3D $(x, y, z)^T$ dans la vue k. Elle est obtenue par

$$\begin{pmatrix} u \\ v \\ w \end{pmatrix} = K_k E_k \begin{pmatrix} x \\ y \\ z \\ 1 \end{pmatrix} \qquad \text{(Eq 8)}$$

L'énergie d'attache aux données s'écrit alors :

$$E_{d,i} = \frac{1}{|S|} \sum_{k \in S} (D_k(\Psi_k(V_i)))^2 \qquad \text{(Eq 9)}$$

où S et l'ensemble des vues sur lesquelles le sommet $V_i$ est visible et |S| son cardinal.

Le terme de répulsion $E_{r,i}$ tend à minimiser la différence de longueur des deux arêtes du contour se joignant en $V_i$. Il s'écrit :

$$E_{r,i} = \left( \frac{\|V_{i-1} - V_i\| - \|V_{i+1} - V_i\|}{\|V_{i-1} - V_i\| + \|V_{i+1} - V_i\|} \right)^2 \qquad \text{(Eq 10)}$$

Le terme de courbure $E_{c,i}$ tend à réduire la courbure perpendiculairement au segment $V_i^+ \ V_i$ L'énergie correspondante s'écrit

$$E_{c,i} = \left(1 - n^{1T} n^2\right)^2 \qquad \text{(Eq 11)}$$

où $n^1$ et $n^2$ sont les normales définies plus haut.

Le terme d'obliquité $E_{o,i}$ tend à conserver la correspondance verticale entre les points du contour supérieur et les points du contours inférieurs. Pour cela, on suppose que l'orientation du modèle de lunettes est telle que celui de la figure 1, à savoir que l'axe des z est l'axe perpendiculaire au plan naturel de la paire «posée sur la table».

On définit alors

$$E_{o,i} = \left(d_i^{\ T} a\right)^2 \qquad \text{(Eq 12)}$$

où $d_i$ désigne le segment $V_i^+ \ V_i$

La résolution s'effectue en parcourant chaque sommet $V_i$ du maillage itérativement et on cherche à minimiser la fonction d'énergie associée $E_i$. C'est une fonction non linéaire, on utilise donc une méthode de minimisation itérative de type Newton. Le développement limité à l'ordre 2 de la fonction d'énergie, pour un petit déplacement $\delta_i$ du sommet, s'écrit :

$$E_i(V_i + \delta_i) \approx E_i(V_i) + \nabla_{Ei}^T \delta_i + \delta_i^T H_{Ei} \delta_i \qquad \text{(Eq 13)}$$

avec $\nabla_{Ei}$ le gradient de $E_i$ et $H_{Ei}$ sa matrice hessienne (tous deux évalués en $V_i$).

Le problème de minimisation non linéaire initial est remplacé par une succession de problèmes linéaires.

On note $f(\delta_i) = E_i(V_i) + \nabla_{Ei}^T \delta_i + \delta_i^T H_{Ei} \delta_i$ et on cherche le minimum $\hat{\delta}_i$ de $f$ par rapport à $\delta_i$.

Il satisfait à la condition : $f(\hat{\delta}_i) = 0$, autrement dit $\nabla_{Ei}^T + H_{Ei} \hat{\delta}_i = 0$ A chaque itération, le sommet $V_i^{k-1}$ est déplacé dans la direction $\hat{\delta}_i^k$

$$V_i^k = V_i^{k-1} + \lambda^k \hat{\delta}_i^k \qquad \text{(Eq 14)}$$

La longueur du pas $\lambda^k$ est soit optimisée (méthode classique dite de "line-search"), soit déterminée préalablement et laissée constante durant toute la procédure.

La procédure itérative décrite ci-dessus est arrêtée lorsque le pas est de norme inférieure à un seuil, lorsque que plus de $k_{max}$ itérations ont été effectuées, ou lorsque l'énergie $E_i$ ne décroit plus suffisamment d'une itération à l'autre.

En variante pour cette procédure de construction, on utilise un logiciel de modélisation 3D afin de modéliser la géométrie de la paire de lunettes réelles 4.

Dans une autre variante de cette procédure de construction, on utilise un modèle de la base de données de modèles $BD_{modèles\_lunettes}$ et on l'adapte manuellement.

Le modèle géométrique simplifié 6 est constitué d'un nombre N de polygones et de leur normales en prenant comme orientation de ces normales, l'extérieur de l'enveloppe convexe à la paire de lunettes réelle 1. Dans le présent exemple nullement limitatif, le nombre N est une valeur proche de vingt.

La figure 1d représente un modèle simplifié pour une paire de lunettes de sport enveloppante. Dans la suite de la description, ces polygones du modèle géométrique simplifié 6, sont appelés **faces de la paire de lunettes modélisée** notés $face_j$. La normale à une face de la paire de lunettes modélisée $face_j$ est notée $\vec{n}_j$, j étant un indice de numérotation de faces $face_j$ qui varie de 1 à N.

L'étape 130 est schématisée figure 3.

**Etape 140 : Création d'une carte d'ombre**

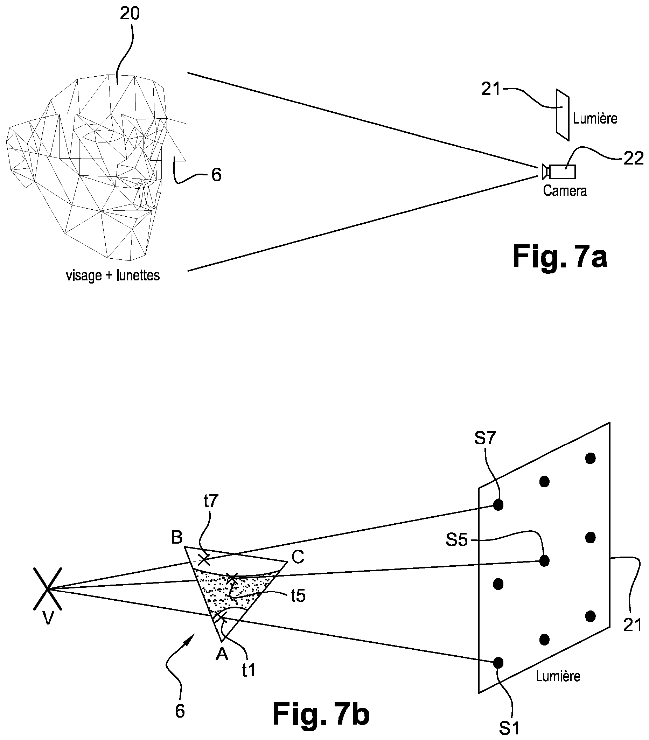

Dans cette étape, on crée une carte d'ombre notée *Visibilité^i* pour chacune des orientations de référence *Orientation^i*. Le but est de calculer l'ombre produite par la paire de lunettes sur un visage, modélisé ici par un visage moyen 20, modèle 3D construit sous forme de maillage de polygones (voir figure 7a).

La modélisation du visage considérée correspond à un visage moyen 20 qui permet de calculer une ombre adaptée à toute personne. La méthode calcule l'occultation lumineuse produite par la paire de lunettes sur chaque zone du visage moyen 20. La technique envisagée permet de calculer des ombres très fidèles tout en ne nécessitant qu'un modèle géométrique simplifié 6 de la paire de lunettes réelle 4. Cette procédure est appliquée pour calculer l'ombre produite par la paire de lunettes, pour chaque image de ladite paire de lunettes. On obtient au final 9 cartes d'ombres *Visibilité^i* correspondant aux 9 orientations de référence *Orientation^i* servant, dans le présent exemple, lors de la création du rendu basé image.

Pour chaque orientation de référence, cette carte d'ombre *Visibilité^i* est calculée en utilisant le modèle géométrique simplifié 6 de la paire de lunettes réelle 4 (modèle simplifié surfacique « low polygons » vu étape 130), un modèle texturé de référence 9 (superposition des calques de texture de la paire de lunettes correspondant à une orientation de référence) orienté selon l'orientation de référence *Orientation^i*, une modélisation d'un visage moyen 20, une modélisation d'une source de lumière 21 et une modélisation 22 d'un appareil photographique.

La carte d'ombre *Visibilité^i* est obtenue en calculant l'occultation lumineuse produite par chaque triangle élémentaire formant le modèle géométrique simplifié 6 de la paire de lunettes réelles 4, sur chaque zone du visage moyen 20, lorsqu'on éclaire l'ensemble par la source de lumière 21. La source de lumière 21 est modélisée par un ensemble de sources ponctuelles émettant dans toutes les directions, situées à intervalles réguliers dans un rectangle, par exemple sous forme d'une matrice 3 x 3 de sources ponctuelles.

La modélisation 22 d'un appareil photographique est une modélisation classique de type connu sous le nom de trou d'épingle («pinhole» en langue anglo-saxonne), c'est à dire une modélisation sans lentille et avec une très petite et simple ouverture. La carte d'ombre *Visibilité^i* obtenue est une image contenant des valeurs comprises entre 0 et 1.

Les coordonnées (X,Y) de la projection 2D d'un vertex (x,y,z) de la scène 3D s'expriment comme suit :

$$X = u0 + f \times \frac{x}{z}, \quad Y = v0 + f \times \frac{y}{z} \tag{Eq 15}$$

dans lesquelles les paramètres $u_0$, $v_0$, f caractérisent la caméra.

Notons K l'opérateur qui à un vertex V(x,y,z) associe sa projection P(X,Y) dans l'image. A un pixel P de coordonnées (X,Z) correspond un ensemble de points 3D {V} tels que K(V) = P.

L'ensemble de ces points 3D forme un rayon. Par la suite, lorsqu'il est fait référence à un rayon 3D associé à un pixel, le rayon 3D correspond à l'ensemble des points 3D se projetant sur le pixel.

Pour calculer l'ombre, pour chaque pixel P de coordonnée (i,j) dans l'image d'ombre *Visibilité^i*, on calcule la valeur O(i,j) de l'image d'ombre. Pour cela on calcule le vertex 3D *V* du visage qui correspond à la projection P. Ce terme V est défini comme l'intersection du rayon 3D défini par le pixel et du modèle 3D de visage 20 (voir figure 7b).

Ensuite, on calcule l'occultation lumineuse produite par la paire de lunettes sur ce vertex. Pour cela, on calcule l'occultation lumineuse produite par chaque triangle du modèle géométrique basse résolution 6

Notons A(m), B(m), C(m) les trois sommets du m-ième triangle du modèle géométrique basse résolution 6. Pour chaque source ponctuelle de la lumière Sn, on calcule l'intersection *tn* du rayon lumineux passant par *V*.

Soit *Tn* la projection 2D du vertex *tn* sur l'image de texture (modèle texturé de référence 9 de la paire de lunettes). La transparence de la texture est connue grâce à l'étape (120) de détourage sur différences, par conséquent, le pixel *Tn* possède une transparence, notée *α(Tn)*.

Finalement, la valeur du pixel *O(i,j)* de l'image d'ombre s'écrit comme suit :

$$O(i,j) = Coefficient \times \sum_{m=1}^{NTriangles} \sum_{n=1}^{NSources} \alpha(T(m,n)) \tag{Eq 16}$$

Le terme Coefficient permet de régler l'opacité de l'ombre *Visibilité^i* en fonction du rendu visuel voulu.

Les données obtenues dans la phase 100 sont stockées dans une **base de données lunettes** $BD_{modèles\_lunettes}$ qui contient, pour chaque paire de lunettes modélisée, le modèle géométrique simplifié 6 de cette paire de lunettes réelle 4, les calques de verre $Verre^i_{calque}$, les calques de monture derrière le verre $Monture^i_{derrière\_verre}$ et les calques de monture à l'extérieur du verre $Monture^i_{extérieur\_verre}$ , pour chacune des V orientations de références.

De plus on ajoute aux données précitées dans la base de données lunettes $BD_{modèles\_lunettes}$, des données spécifiques aux verres 4b de la paire de lunettes réelle 4, telles que son coefficient d'opacité $\alpha$, connu par le fabricant, et éventuellement fourni pour chaque orientation de référence.

## Phase 200 de création d'une base de données de modèles d'yeux $BD_{modèles\_yeux}$

La deuxième phase 200 permet de créer une base de données de modèles d'yeux $BD_{modèles\_yeux}$. Elle est, pour simplifier sa description, subdivisée en dix étapes (210, 220, 230 à 236 et 240). La base de données de modèles d'yeux $BD_{modèles\_yeux}$, ainsi obtenue, sert à caractériser, dans la phase d'essayage 500, les yeux d'une personne photographiée.

Cette base de données d'yeux $BD_{modèles\_yeux}$ peut être créée, par exemple, à partir d'au moins deux mille photographies de visages dites **photographies d'apprentissage** $App_{yeux}{}^k$ ($1 \leq k \leq 2000$). Ces photographies d'apprentissage sont avantageusement, mais non indispensablement, de même taille que les images des modèles de lunettes et du visage de l'utilisateur du procédé d'essayage.

**Etape 210.** Lors de la création de cette base de données d'yeux $BD_{modèles\_yeux}$, on définit dans un premier temps une forme de **visage de référence** 7 en fixant une **distance inter-pupillaire de référence** $di_0$, en centrant le segment inter-pupillaire sur le centre de l'image et en orientant ce segment inter-pupillaire parallèlement à l'axe horizontal de l'image (visage non incliné). Le visage de référence 7 est donc centré sur l'image, d'orientation de face et de grossissement dépendant de la distance inter-pupillaire de référence $di_0$.

**Etape 220.** On définit dans un deuxième temps un **seuil de corrélation** *seuil.*

Puis, pour toute k$^{ième}$ photographie d'apprentissage $App_{yeux}{}^k$ non encore traitée, on applique les étapes 230 à 236

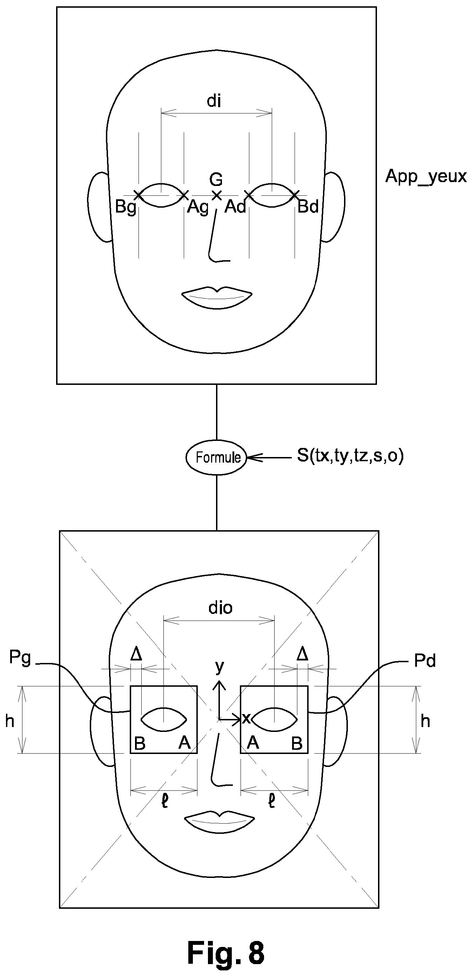

**Etape 230** - On détermine la position précise de **points caractéristiques** (coins des yeux), manuellement dans le présent exemple, c'est à dire la position du point extérieur $B_g{}^k$, $B_d{}^k$ de chaque œil (gauche et droit respectivement avec ces notations), et la position du point intérieur $A_g{}^k$, $A_d{}^k$, tels que définis sur la figure 8. Chaque position est déterminée par ses deux coordonnées dans l'image.

On détermine le centre géométrique $G_g{}^k$, $G_d{}^k$ respectif de ces yeux, calculé comme le barycentre du point extérieur $B^k$ *de* l'œil correspondant et du point intérieur $A^k$ de cet œil, et on calcule la distance inter pupillaire $di^k$.

**Etape 231** - On transforme cette k$^{ième}$ photographie d'apprentissage $App_{yeux}{}^k$ en une image en niveaux de gris $App_{yeux\text{-}gris}{}^k$, par un algorithme connu en soi, et on normalise l'image en niveau de gris en appliquant une similitude $S^k(tx, ty, s, \Theta)$ afin de retrouver l'orientation (de face), l'échelle (distance inter-pupillaire de référence $di_0$) du visage de référence 7.

Cette similitude $S^k(tx, ty, s, \Theta)$ est déterminée comme l'opération mathématique à appliquer aux pixels de la photographie d'apprentissage $App_{yeux}{}^k$ pour centrer le visage (centre des yeux égal au centre de la photographie), d'orientation de face et de grossissement dépendant de la distance inter-pupillaire de référence $di_0$. Les termes $tx$ et $ty$ désignent les translations à appliquer sur les deux axes de l'image pour retrouver le centrage du visage de référence 7. De même, le terme $s$ désigne le facteur de grossissement à appliquer à cette image, et le terme $\Theta$ désigne la rotation à appliquer à l'image pour retrouver l'orientation du visage de référence 7.

On obtient donc une k$^{ième}$ **photographie d'apprentissage normalisée en niveaux de gris** $App_{yeux\_gris\_norm}{}^k$. La distance inter-pupillaire est égale à la distance inter-pupillaire de référence $di_0$. Le segment inter-pupillaire est centré sur le centre de la k$^{ième}$ photographie d'apprentissage normalisée $App_{yeux\_gris\_norm}{}^k$ en niveaux de gris. Le segment inter-pupillaire est parallèle à l'axe horizontal de la photographie d'apprentissage normalisée $App_{yeux\_gris\_norm}{}^k$ en niveaux de gris.

**Etape 232** - On définit une fenêtre, rectangulaire dans le présent exemple, de dimension fixe (largeur l et hauteur h) pour chacun des deux yeux, dans la k$^{ième}$ photographie d'apprentissage normalisée $App_{yeux\_gris\_norm}{}^k$ en niveaux de gris. Ces deux fenêtres sont appelées **patch gauche** $P_g{}^k$ et **patch droit** $P_d{}^k$ dans la suite de cette description, conformément à un usage classique dans ce domaine. On utilisera, par simplification, le terme patch $P$ pour désigner indifféremment l'un ou l'autre de ces patchs $P_g{}^k$, $P_d{}^k$. Chaque patch $P$ est une sous-image matricielle extraite d'une image matricielle initiale d'un visage. Il est clair qu'en variante, une forme autre que rectangulaire peut être utilisée pour le patch, par exemple polygonale, elliptique ou circulaire.

La **position du patch** $P$ correspondant à un œil (gauche, droit respectivement), est définie par la distance fixe $\Delta$ entre le point extérieur de l'œil B et le bord du patch $P$ le plus proche de ce point extérieur de l'œil B (voir figure 7).

Cette distance fixe $\Delta$ est choisie afin qu'aucune texture extérieure au visage ne soit incluse dans le patch $P$. La largeur l et la hauteur h des patchs $P_g{}^k$, $P_d{}^k$ sont constantes et prédéfinies, afin que le patch $P$ contienne l'œil correspondant à ce patch $P$ en entier, et ne contienne aucune texture qui soit extérieure au visage, et ceci quelle que soit la photographie d'apprentissage $App_{yeux}{}^k$.

**Etape 233** - Pour chacun des deux patchs $P_g{}^k$, $P_d{}^k$ associés à la k$^{ième}$ photographie d'apprentissage normalisée $App_{yeux\_gris\_norm}{}^k$ en niveaux de gris (correspondant chacun à un œil), on normalise les niveaux de gris.

Pour ce faire, on définit un vecteur-colonne texture *T* appelé vecteur-colonne texture d'origine constitué des niveaux de gris du patch *P*, rangé dans le présent exemple dans l'ordre des lignes, la taille du vecteur-colonne texture *T* est égale au nombre de lignes (h) multiplié par le nombre de colonnes (l) et on définit un vecteur-colonne *I* de valeur unité, de même taille que le vecteur-colonne texture T.

L'opération mathématique consiste donc à calculer la moyenne des niveaux de gris du patch P, moyenne notée $\mu_T$, à normaliser l'écart type de ces niveaux de gris, noté $\sigma_T$ et à appliquer la formule :

$$T0 = \frac{(T - \mu_T I)}{\sigma_T} \qquad \text{(Eq 17)}$$

avec *T0* vecteur-colonne texture normalisé (en niveau de gris) et *T* le vecteur-colonne texture d'origine.

**Etape 234** - Cette étape 234 ne s'effectue que pour la première photographie d'apprentissage $App_{yeux}{}^1$. La base de données d'yeux $BD_{modèles\_yeux}$ est alors vide.

Pour la première photographie d'apprentissage $App_{yeux}{}^1$ traitée, on mémorise chacun des patchs $P_g{}^1$, $P_d{}^1$ dans la base de données d'yeux $BD_{modèles\_yeux}$ en stockant les données suivantes :

- le vecteur-colonne texture normalisé $T0_g{}^1$, $T0_d{}^1$ correspondant à un patch $P_g{}^1$, $P_d{}^1$,
- la position précise normalisée des points caractéristiques en appliquant la similitude $S^1(tx, ty, s, \Theta)$ aux positions précises des points caractéristiques déterminées préalablement sur la photographie d'apprentissage $App_{yeux}{}^1$,
- la similitude $S^1(tx, ty, s, \Theta)$ ,
- et toute autre information utile : morphologie, luminosité etc.,

puis on passe à l'étape 230 pour traiter la seconde photographie d'apprentissage $App_{yeux}{}^2$ et les suivantes $App_{yeux}{}^k$.

Les patchs $P_g{}^1$, $P_d{}^1$ stockés dans la base de données d'yeux $BD_{modèles\_yeux}$ dans cette étape 234 et dans l'étape 236 sont appelés **patchs descripteurs.**

**Etape 235** - Pour chacun des patchs *P* associés à la k^[ième] photographie d'apprentissage normalisée $App_{yeux\_gris\_norm}{}^k$ en niveaux de gris (correspondant chacun à un œil), on corrèle le vecteur-colonne texture normalisé correspondant *T0* avec chacun des vecteurs-colonne texture normalisés $T0_i$ de patchs descripteurs correspondants.

On utilise dans le présent exemple nullement limitatif une mesure de corrélation $Z_{ncc}$ définie, par exemple, par

$$Z_{ncc}(T0, T0_i) = {}^t T0 * T0_i \qquad \text{(Eq 18)}$$

(on note ${}^t T0$ le vecteur transposé du vecteur-colonne texture normalisé *T0*). Le dimensionnement des patchs $P_g{}^k$, $P_d{}^k$, étant constant, les vecteurs-colonne texture normalisés $T0$, $T0_i$ ont tous la même taille.

**Etape 236** - On compare, pour chacun des patchs $P_g{}^k$, $P_d{}^k$, cette mesure de corrélation $Z_{ncc}$ avec le seuil de corrélation préalablement défini *seuil*. Si la corrélation $Z_{ncc}$ est inférieure au seuil, soit $Z_{ncc}(T0^k, T0_i) <seuil$, on stocke le patch *P* dans la base de données d'yeux $BD_{modèles\_yeux}$ en mémorisant les données suivantes :

- le vecteur-colonne texture normalisé $T0^k$,
- la position précise normalisée des points caractéristiques, en appliquant la similitude $S^k(tx, ty, s, \Theta)$ aux positions précises des points caractéristiques, déterminées préalablement sur la photographie d'apprentissage $App_{yeux}{}^k$,
- la similitude $S^k(tx, ty, s, \Theta)$
- et toute autre information utile : morphologie, luminosité etc.

On peut alors traiter une nouvelle photographie d'apprentissage $App_{yeux}{}^{k+1}$ en repassant à l'étape 230.

**Etape 240** - On effectue une statistique sur l'ensemble des similitudes $S^k(tx, ty, s, \Theta)$ stockées dans la base de données $BD_{modèles\_yeux}$.

Dans un premier temps, on calcule la valeur moyenne de la translation *tx* et la valeur moyenne de la translation *ty*, valeurs que l'on va stocker dans un vecteur à deux dimensions $\vec{\mu}$.

Dans un deuxième temps on calcule l'écart type σ des paramètres de position *tx, ty* par rapport à leur moyenne caractérisée par $\vec{\mu}$.

Dans une variante, on stocke les positions précises des points caractéristiques des yeux, (ces positions précises étant ici non normalisées) déterminées préalablement sur la k^[ième] photographie d'apprentissage $App_{yeux}{}^k$. On stocke également la similitude $S^k(tx, ty, s, \Theta)$ ou les valeurs de tous les paramètres permettant de recalculer ces positions précises.

**Phase 300 : procédé de recherche de critères de reconnaissance d'un visage dans une photo.**

La phase 300 a pour but de détecter la présence éventuelle d'un visage dans une photo. On utilise un **algorithme de dopage** («boosting» en langue anglaise), de type connu en soi, et par exemple décrit par P. Viola et L. Jones «Rapid object detection using a boosted cascade of features» et amélioré par R. Lienhart «a detector tree of boosted classifiers for real-time object detection tracking».

On rappelle que le terme de **classifieur** désigne, dans le domaine de l'apprentissage automatique, une famille d'algorithmes de classement statistique. Dans cette définition, un classifieur regroupe dans une même classe des éléments présentant des propriétés proches.

On désigne par **classifieur fort** un classifieur très précis (taux d'erreur faible), par opposition à des **classifieurs faibles,** peu précis (un peu meilleur qu'une classification au hasard).

Sans entrer dans les détails, qui sortent du cadre de la présente invention, le principe des algorithmes de dopage est d'utiliser un nombre de classifieurs faibles suffisant, afin de faire émerger par combinaison ou sélection un classifieur fort atteignant un taux de réussite de classification désiré.

Plusieurs algorithmes de dopage sont connus. On utilise dans le présent exemple l'algorithme de dopage connu sous le nom commercial «AdaBoost» (Freund and Schapire 1995) pour créer plusieurs classifieurs forts (un vingtaine par exemple) qu'on organisera en cascade, de façon connue en soi.

Dans le cas de la recherche d'un visage dans une photo, si un classifieur fort pense avoir trouvé un visage au niveau d'analyse qu'il lui est donné d'avoir avec son ensemble de classifieurs faibles, alors il passe l'image au classifieur fort suivant plus précis, moins robuste mais libéré de certaines incertitudes grâce au classifieur fort précédent.

Pour obtenir une cascade possédant de bonnes propriétés de classification sur un environnement non contrôlé (illumination variable, lieux variable, visages à détecter sensiblement variables), la constitution **d'une base d'apprentissage de visages** $BDA_{visages}$ est nécessaire.

Cette base d'apprentissage de visages $BDA_{visages}$ est constituée d'un ensemble d'images dites **exemples positifs de visages** $Visage_{positif}$ (type d'exemple que l'on veut détecter) et d'un ensemble d'images dites **exemples négatifs de visages** $Visage_{négatif}$ (type d'exemple que l'on ne veut pas détecter). Ces images sont avantageusement, mais non indispensablement, de même taille que les images des modèles de lunettes et du visage de l'utilisateur du procédé d'essayage.

Pour générer l'ensemble d'images dites exemples positifs de visages $Visage_{positif}$, on choisit dans un premier temps des **images de visages de référence** $Visage_{référence}$:

- tels que ces visages soient de même taille (on peut par exemple imposer que la distance inter pupillaire sur l'image soit égale à la distance inter pupillaire de référence $di_0$),
- tels que le segment entre les centres des deux yeux soit horizontal et centré verticalement sur l'image, et
- tels que l'orientation de ce visage soit de face ou légèrement de profil de -45° à 45 °.

L'ensemble de ces images de visages de référence $Visage_{référence}$ doit comprendre plusieurs illuminations.

Dans un deuxième temps, on construit à partir de ces images de visages de référence $Visage_{référence}$, d'autres **images modifiées** $Visage_{modifié}$ en appliquant des variations d'échelles, de rotations et de translations dans des limites déterminées par un essayage normal de lunettes (inutile par exemple de créer un visage renversé).

L'ensemble des images dites exemples positifs de visages $Visage_{positif}$ est constitué des images de visages de référence $Visage_{référence}$ et des images modifiées $Visage_{modifié}$ à partir de ces images de visages de référence $Visage_{référence}$. Dans le présent exemple, le nombre d'images dites exemples positifs de visages $Visage_{positif}$ est supérieur ou égal à cinq mille.

L'ensemble des images d'exemples négatifs de visages $Visage_{négatif}$ est constitué d'images ne pouvant pas être intégrées dans les images dites exemples positifs de visages $Visage_{positif}$.

Ce sont donc des images ne représentant pas de visages, ou bien des images représentant des morceaux de visages, ou des visages ayant subit des variations aberrantes. Dans le présent exemple, on prend un groupe d'images pertinentes pour chaque niveau de la cascade des classifieurs forts. Par exemple, on choisit cinq mille images d'exemples négatifs de visages $Visage_{négatif}$ par niveau de cascade. Si on choisit d'utiliser, comme dans le présent exemple, vingt niveaux dans la cascade, on obtient cent mille images d'exemples négatifs de visages $Visage_{négatif}$ dans la base d'apprentissage de visages $BDA_{visages}$.

La phase 300 utilise cette base d'apprentissage de visages $BDA_{visages}$ afin d'entraîner un premier algorithme de dopage $AD1$, destiné à être utilisé lors de l'étape 510 de la phase 500.

**Phase 400 : procédé de recherche de critères de reconnaissance de points caractéristiques dans un visage**

La phase 400 a pour but de fournir un procédé afin de détecter la position des yeux dans un visage sur une photo.

Cette détection de la position des yeux est, dans le présent exemple, réalisée avec un second algorithme de détection *AD2* de type Adaboost, entrainé avec une **base d'apprentissage d'yeux** $BDA_{yeux}$ décrite ci-dessous.

La base d'apprentissage d'yeux $BDA_{yeux}$ est constituée d'un ensemble d'exemples positifs d'yeux $Yeux_{positif}$ (on appelle exemples positifs d'yeux des exemples de ce que l'on veut détecter) et d'un ensemble d'exemples négatifs d'yeux $Yeux_{négatif}$ (on appelle exemples négatifs d'yeux des exemples de ce que l'on ne veut pas détecter).

Pour générer l'ensemble d'images dites exemples positifs d'yeux $Yeux_{positif}$, on choisit dans un premier temps des **images d'yeux de référence** $Yeux_{référence}$, tels que ces yeux soient de même taille, redressés (alignés horizontalement), et centrés sous différentes illuminations et sous différents états (fermés, ouverts, à demi-fermés etc.),

Dans un deuxième temps, on construit à partir de ces images d'yeux de référence $Yeux_{référence}$, d'autres **images d'yeux modifiées** $Yeux_{modifiés}$ en appliquant des variations d'échelles, de rotations et de translations dans des limites faibles.

L'ensemble des images dites exemples positifs d'yeux $Yeux_{positif}$ sera donc constitué des images d'yeux de référence $Yeux_{référence}$ et des images d'yeux modifiées $Yeux_{modifiés}$ à partir de ces images d'yeux de référence $Yeux_{référence}$. Dans le présent exemple, le nombre d'images dites exemples positifs d'yeux $Yeux_{positif}$ est supérieur ou égal à cinq mille.

L'ensemble des images d'exemples négatifs d'yeux $Yeux_{négatif}$ doit être constitué d'images de parties de visages qui ne sont pas des yeux (nez bouche, joue, front etc.) ou qui sont des yeux partiels (morceaux d'œil).

Pour augmenter le nombre et la pertinence d'images d'exemples négatifs d'yeux $Yeux_{négatif}$, on construit des images négatives supplémentaires à partir des images d'yeux de référence $Yeux_{référence}$ en appliquant des variations d'échelles, de rotations et de translations suffisamment importantes pour que ces images ainsi recrées ne soient pas intéressantes pas dans le cadre des images d'exemples positifs d'yeux $Yeux_{positif}$.

On choisit un groupe d'images pertinentes pour chaque niveau de la cascade des classifieurs forts. Par exemple, on peut choisir cinq mille images d'exemples négatifs d'yeux $Yeux_{négatif}$ par niveau de cascade. Si on a vingt niveaux dans la cascade, on obtient alors cent mille images d'exemples négatifs d'yeux $Yeux_{négatif}$ dans la base d'apprentissage d'yeux $BDA_{yeux}$.

La phase 400 utilise éventuellement cette base d'apprentissage d'yeux $BDA_{yeux}$ afin d'entraîner un second algorithme de dopage *AD2*, qui est utilisé dans une variante du procédé impliquant une étape 520.

**Phase 500 d'essayage de lunettes virtuelles**

Dans la phase 500, d'essayage de lunettes virtuelles, le procédé de génération d'une image finale 5 à partir de la photo d'origine 1, se décompose en sept étapes :

- une étape 510 de détection du visage 2 du sujet dans une photo d'origine 1.
- éventuellement une étape 520 de détermination préliminaire de la position de points caractéristiques du sujet dans la photo d'origine 1.
- une étape 530 de détermination de la position de points caractéristiques du sujet dans la photo d'origine 1.
- une étape 540 de détermination de l'orientation 3D du visage 2.
- une étape 550 de choix de la texture à employer pour la paire de lunettes virtuelle 3 et de génération de la vue des lunettes dans la pose 3D / 2D considérée.
- une étape 560 de création d'un premier rendu 28 en établissant un rendu en couches dans la position correcte conforme à la position du visage 2 dans la photo d'origine 1.
- une étape 570 d'obtention du rendu photoréaliste en ajoutant des calques dits calques sémantiques afin d'obtenir l'image finale 5.

**Etape 510** : L'étape 510 utilise dans le présent exemple le premier algorithme de dopage *AD1* entraîné lors de la phase 300 afin de déterminer si la photo d'origine 1 contient un visage 2. Si c'est le cas on passe à l'étape 520, sinon on avertit l'utilisateur qu'aucun visage n'a été détecté.

**Etape 520** : elle a pour but de détecter la position des yeux dans le visage 2 de la photo d'origine 1. L'étape 520 utilise ici le second algorithme de dopage *AD2* entraîné lors de la phase 400.

La position des yeux, déterminée lors de cette étape 520, se traduit par la position de points caractéristiques. Cette étape 520 fournit alors une première approximation qui est affinée dans l'étape suivante 530.

**Etape 530** : elle consiste à déterminer une **similitude** $\beta$, à appliquer à une photo d'origine 1, pour obtenir un visage, similaire à un visage de référence 7 en grossissement et en orientation, et à déterminer la position du **coin extérieur précis** A et du **point intérieur précis** B pour chaque œil dans le visage 2 de la photo d'origine 1.

La position des yeux, déterminée lors de cette étape 530, se traduit par la position de **points caractéristiques.** Comme on l'a dit, ces points caractéristiques, comprennent deux points par œil, le premier point est défini par le coin A de l'œil le plus intérieur possible (celui qui est le plus proche du nez), le deuxième point B est le coin de l'œil le plus extérieur possible (celui qui s'éloigne le plus du nez). Le premier point, A, est appelé point intérieur de l'œil, et le deuxième point, B, est appelé point extérieur de l'œil.

Cette étape 530 utilise la base de données de modèles d'yeux $BD_{modèles\_yeux}$. De plus cette étape 530 fournit une information caractérisant le décentrage, la distance à la caméra et l'orientation 2D du visage 2 dans la photo d'origine 1.

Cette étape 530 utilise un algorithme itératif qui permet d'affiner la valeur de la similitude $\beta$ et les positions des points caractéristiques.

L'initialisation des paramètres de similitude $\beta$ et des points caractéristiques se fait de la façon suivante. L'étape 520 ayant fourni respectivement pour chaque œil, un point extérieur de première approche de l'œil $A_0$ et un point intérieur de première approche $B_0$, ces points servent d'initialisation pour les points caractéristiques. On en déduit les valeurs d'initialisation de la similitude $\beta$.

La similitude $\beta$ est définie par une translation *tx, ty* en deux dimensions x, y, un paramètre d'échelle *s* et un paramètre de rotation $\theta$ dans le plan image.

On a donc $\beta_0 = \begin{pmatrix} x_0 \\ y_0 \\ \theta_0 \\ s_0 \end{pmatrix}$ , valeur initiale de $\beta$.

Les différentes étapes d'une itération sont les suivantes :

On utilise les points caractéristiques pour créer les deux patchs $P_g$, $P_d$ contenant les deux yeux. La création de ces patchs $P_g$, $P_d$ se fait de la façon suivante ;

On transforme la photo d'origine 1 en une image en niveaux de gris 8, par un algorithme connu en soi, et on construit les deux patchs $P_g$, $P_d$ avec l'information des points extérieur B et intérieur A.

La position d'un patch $P_g$, $P_d$ est définie par la distance fixe D préalablement utilisée dans les étapes 232 et suivantes entre le bord extérieur B de l'œil et le bord du patch le plus proche de ce point B. Le dimensionnement du patch $P_g$, $P_d$ (largeur et hauteur) a été défini dans les étapes 232 et suivantes. Si les patchs $P_g$, $P_d$ ne sont pas horizontaux (points extérieur et intérieur du patch non alignés horizontalement), on utilise une interpolation bilinéaire, de type connu en soi, pour les aligner.

On stocke l'information de la texture de chacun des deux patchs $P_g$, $P_d$ dans un vecteur $(T_g)$, puis on normalise ces deux vecteurs en soustrayant leur moyenne respective et en divisant par leur écart type. On obtient de la sorte deux vecteurs normalisés notés $T0_d$ et $T0_g$.

On s'intéresse à la réalisation de $\beta$ en termes de probabilité. On considère les réalisations des paramètres de position *tx, ty*, d'orientation $\Theta$, et d'échelle *s*, indépendantes et on considère de plus que les distributions de $\Theta$, *s* suivent une loi uniforme.

On considère enfin que les paramètres de position *tx, ty* suivent une distribution gaussienne de vecteur moyen $\vec{\mu}$ (à deux dimensions) et d'écart type $\sigma$. On note p($\beta$) la probabilité que $\beta$ se réalise. En reprenant les variables $\vec{\mu}$, $\sigma$ et $\vec{v} = \begin{pmatrix} x \\ y \end{pmatrix}$ , stockées dans la base de données d'yeux $BD_{modèles\_yeux}$, et établies lors de l'étape 240, on choisit un critère d'optimisation suivant :

$$\arg\max_{x,y,\theta,s} \ln p(\beta/D) = \arg\max(\ln p(D_d/\beta), \ln p(D_g/\beta)) - K \frac{\left\| \vec{v} - \vec{\mu} \right\|^2}{2\sigma^2} \quad \text{(Eq 19)}$$

avec

$D_d$ données variable aléatoire représentant le patch droit $P_d$, constitué de la texture du patch droit,
$D_g$ données variable aléatoire représentant le patch gauche $P_g$, constitué de la texture du patch gauche,
$D = D_d \cup D_g$ données variable aléatoire représentant les deux patchs $P_g$, $P_d$. On considère que les réalisations de $D_d$ et $D_g$ sont indépendantes,
p($\beta$/D) probabilité que $\beta$ se réalise sachant D,
K constante,

p($D_d$/ β) = max ρ($D_d$/ β, *id*)

*id* représentant un patch descripteur (patchs stockés dans la base de données d'yeux $BD_{modèles\_yeux}$).

On parcourt donc l'ensemble des patchs descripteurs de la base de données d'yeux $BD_{modèles\_yeux}$. Le terme ρ représente la corrélation $Z_{ncc}$ (comprise entre 0 et 1), explicitée dans les étapes 235 et suivantes, entre le patch $P_d$ de l'œil droit (respectivement $P_g$ de l'œil gauche) et un patch descripteur transformé selon la similitude β.

Le maximum de ces corrélations $Z_{nc}$ permet de calculer les probabilités p($D_d$ / β) (respectivement p($D_g$ / β).

Le terme de régulation $-K \dfrac{\left\| \vec{v} - \vec{\mu} \right\|^2}{2\sigma^2}$ permet de garantir la validité physique de la solution proposée.

Le critère d'optimisation défini plus haut (Equation 19), permet donc de définir une similitude β optimale et un patch optimal parmi les patchs descripteurs pour chacun des deux patchs $P_g$, $P_d$ ce qui permet de donner de nouvelles estimations de position des coins extérieur A et point intérieur B de chaque œil, c'est à dire des points caractéristiques.

On teste si cette nouvelle valeur de similitude β est suffisamment éloignée de la valeur précédente, par exemple d'un écart ε : si $\|β_{i-1} - β_i\| > ε$ on recommence une itération. Dans cette itération, $β_i$ représente la valeur de β trouvée à la fin de l'itération en cours et $β_{i-1}$ la valeur de similitude β trouvée à la fin de l'itération précédente, c'est à dire aussi la valeur initiale de similitude β pour l'itération en cours.

La constante K permet de réaliser le bon compromis entre les mesures de corrélation *Zncc* et une position moyenne dont on ne désire pas s'écarter trop fortement.

Cette constante K est calculée, en utilisant le procédé qui vient d'être décrit, sur un ensemble d'images test, différentes des images ayant servi à créer la base de données, et en faisant varier K.

On comprend que la constante K est choisie de manière à minimiser la distance entre les points caractéristiques des yeux, positionnés manuellement sur les images d'apprentissage, et ceux trouvés lors de l'étape 530.

**Etape 540** : elle a pour but d'estimer l'orientation 3D du visage, c'est à dire de fournir l'angle Φ et l'angle Ψ de l'appareil ayant pris la photo 1, par rapport au plan principal du visage. Ces angles sont calculés à partir de la position précise 38 des points caractéristiques déterminée lors de l'étape 530, par une transformation géométrique connue en soi.

**Etape 550** : elle consiste :

- dans un premier temps, 1/ à rechercher le modèle géométrique simplifié 6 du modèle de paire de lunettes virtuelles 3, stocké dans la base de données lunettes $BD_{modèles\_lunettes}$, et, 2/ à lui appliquer l'orientation de référence $Orientation^i$ la plus proche des angles Φ et Ψ (déterminés lors de l'étape 540),
- dans un deuxième temps, 3/ à attribuer une texture au modèle géométrique simplifié 6, positionné dans l'orientation 3D de l'orientation de référence $Orientation^i$ la plus proche des angles Φ et Y, en utilisant la texture de l'orientation de référence $Orientation^i$ la plus proche de ces angles Φ et Ψ. Ce qui revient à texturer chacune des N faces $face_j$ du modèle géométrique simplifié 6 tout en classifiant la face dans la vue en cours en trois classes : face interne de la monture, face externe de la monture, verre.

On rappelle que le modèle géométrique simplifié 6 est divisé en N faces $face_j$ munies chacune d'une normale $\vec{n_j}$. Ce calcul de texture se fait de la manière suivante, en utilisant la texture, c'est à dire les différents calques, de l'orientation de référence $Orientation^i$ la plus proche des angles Φ et Ψ :

- inversion des normales $\vec{n_j}$ de chacune des faces $face_j$ et projection du **calque monture** $Monture^i$, restreint à l'espace verre de l'orientation de référence $Orientation^i$ la plus proche des angles Φ et Ψ. En notant $proj \perp (image, \vec{n})$ l'opérateur de projection orthogonale d'une image sur une face 3D de normale $\vec{n}$ dans une pose donnée, on a :

$$Texture_{face}(-\vec{n}) = proj \perp (Monture^i \otimes Verre^i_{binaire}, -\vec{n}) \perp \qquad \text{(Eq 20)}$$

On obtient donc un **calque de texture de face interne de monture** $TextureMonture^i_{face\_interne}$. Ce calque $TextureMonture^i_{face\_interne}$ permet de structurer (c'est-à-dire de déterminer une image) les branches de la monture 4a, vues à travers le verre 4b dans le **modèle texturé de référence** 9 (superposition des calques de texture de la paire de lunettes correspondant à une orientation de référence), orienté selon l'orientation de référence $Orientation^i$ la plus proche des angles Φ et Ψ.

- projection du calque monture $Monture^i$, restreint à l'espace hors verre de l'orientation de référence $Orientation^i$ la plus proche des angles Φ et Ψ. Ce qui s'écrit :

$$Texture_{face}(\vec{n}) = proj \perp (Monture^i \otimes (1 - Verre^i{}_{binaire}), \vec{n}) \quad (Eq\ 21)$$

- On obtient un **calque de texture de face externe de monture** $TextureMonture^i_{face\_externe}$ qui permet de structurer les faces extérieures au verre 4b de la monture 4a, dans le modèle texturé de référence 9, orienté selon l'orientation de référence $Orientation^i$, la plus proche des angles $\Phi$ et $\Psi$.
- projection du calque verre restreinte au verre. Ce qui s'écrit :

$$Texture_{face}(-\vec{n}) = proj \perp (Verre^i \otimes Verre^i{}_{binaire}, \vec{n}) \quad (Eq\ 22)$$

On obtient un **calque de texture de verre** $TextureVerre^i$ qui permet de structurer le verre 4b, dans le modèle texturé de référence 9, orienté selon l'orientation de référence $Orientation^i$, la plus proche des angles $\Phi$ et $\Psi$.

**L'étape 560** consiste à générer un **modèle texturé orienté** 11, orienté selon les angles $\Phi$ et $\Psi$ et selon l'échelle et l'orientation de la photo d'origine 1 (qui sont quelconques et non nécessairement égaux aux angles des orientations de référence), à partir du modèle texturé de référence 9, orienté selon l'orientation de référence $Orientation^i$, la plus proche des angles $\Phi$ et $\Psi$, et des paramètres $\Theta$ et s de la similitude $\beta$ (déterminée lors de l'étape 530).

Dans un premier temps, on utilise une interpolation affine bilinéaire pour orienter un **modèle texturé interpolé** 10 selon les angles $\Phi$ et $\Psi$ (déterminés lors de l'étape 540) à partir du modèle texturé de référence 9 (déterminé lors de l'étape 550) orienté selon l'orientation de référence $Orientation^i$ la plus proche de ces angles $\Phi$ et $\Psi$.

Dans un deuxième temps, on utilise la similitude $\beta$ à appliquer, afin d'obtenir la même échelle, la même orientation image (2D) et le même centrage que la photo d'origine 1. On obtient alors un **modèle texturé orienté** 11.

Dans un troisième temps on écarte les branches des lunettes virtuelles 3 selon la morphologie du visage de la photo d'origine 1 et ceci de manière géométrique.

On obtient donc à la fin de cette étape 560, **un calque lunette** $Lunettes_{calque}$ de la paire de lunettes virtuelle 3 et on déduit un **calque binaire** $Lunettes_{calque\_binaire}$ (ombre chinoise de ce calque lunette), orientés comme la photo d'origine 1, et qui peuvent donc lui être superposés.

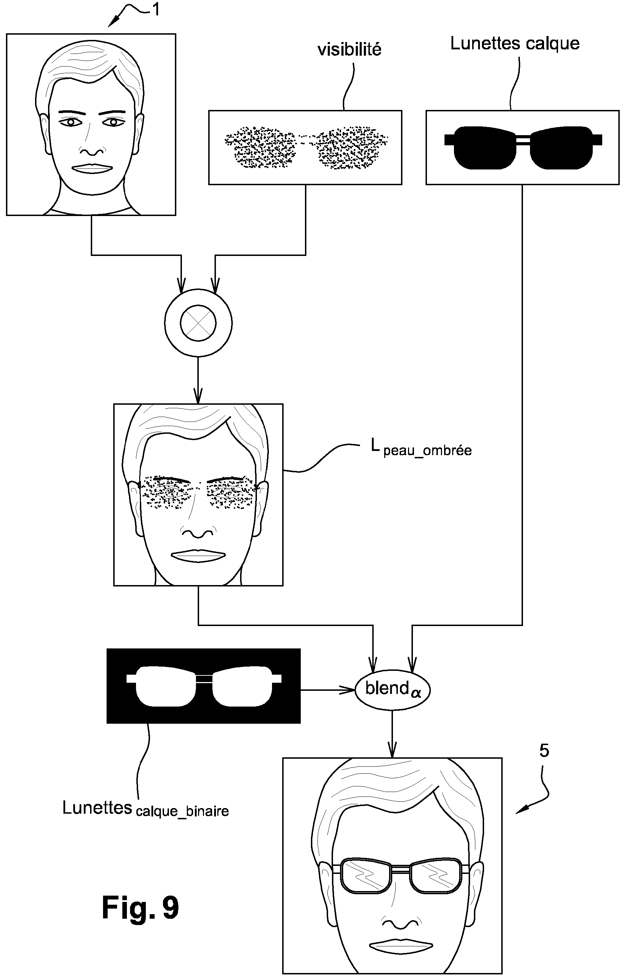

**L'étape 570** consiste à prendre en compte les interactions lumineuses dues au port des lunettes virtuelles, c'est à dire à prendre en compte par exemple les ombres portées sur le visage 2, la visibilité de la peau à travers le verre des lunettes, la réflexion de l'environnement sur les lunettes. Elle est décrite par la <u>figure 9</u>. Elle consiste à :

1) multiplier la carte d'ombre $Visibilité^i$ (obtenue dans l'étape 140) et la photo 1 pour obtenir un calque photo ombrée noté $L_{peau\_Ombrée}$. Soit, en notant $Photo$ la photo d'origine 1:

$$L_{peau\_Ombrée} = Visibilité^i \otimes Photo \quad (Eq\ 23)$$

2) «mélanger» le calque photo ombrée $L_{peau\_Ombrée}$ et le calque lunette $Lunettes_{calque}$ par interpolation linéaire dépendante du coefficient d'opacité $\alpha$ du verre 4b dans une zone limitée au calque binaire $Lunettes_{calque\_binaire}$ de la paire de lunettes virtuelle 3, pour obtenir l'image finale 5 .

Soient $C_x$ et $C_y$ deux calques quelconques, on définit une fonction $blend_\alpha$ par :

$$blend_\alpha\ (C_x\ ,\ C_y) = \alpha * C_x + (1-\alpha) * C_y \quad (Eq\ 24)$$

avec $\alpha$ coefficient d'opacité du verre 4b stocké dans la base de données de lunettes $BD_{modèles\_lunettes}$
On applique alors cette fonction avec
$C_x$= calque lunette $Lunettes_{calque}$
$C_y$ = calque photo ombrée $L_{peau\_Ombrée}$
et ceci uniquement dans la zone des lunettes déterminée par le calque binaire $Lunettes_{calque\_binaire}$.

Le résultat de cette fonction est une image de la photo d'origine 1 sur laquelle est superposée une image du modèle de lunette choisi, orientée comme la photo d'origine 1, et dotée de propriétés d'ombres

**Variantes de l'invention**

Dans une variante, la procédure de construction permettant de construire le modèle géométrique simplifié 6 d'une nouvelle forme de paire de lunettes réelles 4, c'est à dire d'une forme ne se trouvant pas dans la base de données modèles $BD_{modèles\_lunettes}$ est ici la suivante :

- on rend cette paire de lunettes réelles 4 non réfléchissante. On utilise par exemple pour ce faire de la poudre de ressuage de type connu en soi, utilisée dans l'industrie mécanique et aéronautique pour détecter des défauts dans des pièces produites. Cette poudre est déposée par des moyens connus sur la monture 4a et sur les verres 4b afin de rendre l'ensemble mat et opaque et donc non réfléchissant.
- on établit la géométrie de cette paire de lunettes réelle 4 mate et opaque à l'aide, par exemple, d'un scanner utilisant des lasers ou de la lumière dite structurée. La paire de lunettes réelle 4 présente en général une profondeur dépassant la profondeur de champ acceptée par ces types de scanners actuels. De ce fait, on assemble plusieurs scans de parties de cette paire de lunettes réelles 4, par des techniques classiques, à partir d'images basées par exemple sur des repères physiques. Dans le présent exemple, ces repères physiques sont crées à l'aide de peintures à l'eau sur la poudre de ressuage déposée sur la paire de lunettes réelle 4.

Dans encore une autre variante, l'étape 540, ayant pour but d'estimer l'orientation 3D du visage, procède en détectant, si possible, les deux points sur l'image représentant les tempes qu'on appelle **points image tempe** 63.

La caractéristique visuelle d'un point tempe est la rencontre visuelle de la joue et de l'oreille.

La détection des points image tempe 63 peut échouer dans le cas par exemple de visage suffisamment tournés (> quinze degrés), ou cheveux devant la tempe etc. On classe l'échec de la détection d'un point image tempe 63 en deux causes :

- première cause : le point image tempe 63 est caché par le visage 2 lui-même car l'orientation de ce dernier fait qu'il n'est pas visible
- deuxième cause le point image tempe 63 est caché par un élément autre que la morphologie, le plus souvent les cheveux.

L'étape 540 utilise ici des outils de segmentation qui permettent, par ailleurs, si il y a échec de la détection d'un point image tempe 63, de déterminer dans quelle classe de cause d'échec l'image se situe.

L'étape 540 comprend un procédé de décision d'utilisation ou non du ou des points image tempes 63, selon un critère de décision préalablement mémorisé.

Si ce critère n'est pas vérifié, on considère que l'angle $\Phi$ et l'angle $\Psi$ sont nuls. Dans le cas contraire, l'angle $\Phi$ et l'angle $\Psi$ sont calculés à partir de la position du ou des points image tempe 63 détectés, et de la position précise 38 des points caractéristiques déterminée lors de l'étape 530.

On comprend que la description qui vient d'être faite pour des images de paires de lunettes à placer sur une image d'un visage en temps réel s'applique, dans un exemple ne faisant pas partie de l'invention et moyennant des modifications à la portée de l'homme de l'art, à des problèmes analogues, par exemple présentation d'un modèle de chapeau sur le visage d'un utilisateur.

**Revendications**

1. Procédé de détermination d'un modèle géométrique simplifié (6) d'un modèle d'une paire de lunettes réelles (4), ledit modèle étant constitué d'un nombre prédéterminé N de faces et de leur normales en prenant comme orientation de ces normales, l'extérieur de l'enveloppe convexe à la paire de lunettes réelle (1), le modèle géométrique simplifié (6) d'une paire de lunettes réelle (4), constituée d'une monture (4a) et de verres (4b), étant obtenu dans une phase 100 dans laquelle :

   - on réalise un ensemble de prise de vues de la paire de lunettes réelles (4) à modéliser, avec des angles de vues différents,
   - on construit le modèle géométrique simplifié (6), constitué d'un nombre N de faces $face_j$ et de leur normale

   $$\vec{n}_j$$

   en partant d'un maillage surfacique peu dense, et en utilisant un algorithme d'optimisation qui déforme le maillage du modèle de sorte que les projections de sa silhouette dans chacune des vues correspondent au mieux aux silhouettes détectées dans les images ;

la phase 100 comprenant également une étape 110 consistant à obtenir des images de la paire de lunettes réelles (4), au cours de laquelle :

- on photographie en haute résolution la paire de lunettes réelle 4 selon V orientations de référence *Orientation$^i$* différentes et ceci dans N configurations lumineuses révélant la transmission et la réflexion du verre de lunettes (4b),
- on choisit ces orientations de référence en discrétisant un spectre d'orientations correspondant aux orientations possibles lors d'un essayage de lunettes,
- on obtient V*N images haute résolution notées *Image-lunettes$^{i,j}$* de la paire de lunettes réelle (4) ;
- la première configuration lumineuse respecte les couleurs et matières de la paire de lunettes réelle (4) en utilisant des conditions de luminosité neutres, les V images haute résolution de transmission *Transmission$^i$* créées dans cette configuration lumineuse permettant de révéler la transmission maximale de la lumière à travers les verres (4b),
- la seconde configuration lumineuse met en évidence les particularités géométriques de la paire de lunettes réelle (4), en utilisant des conditions de réflexions intenses, les V images haute résolution de réflexion *Réflexion'* obtenues dans cette seconde configuration lumineuse révélant les qualités physiques de réflexion du verre (4b).

2. Procédé selon la revendication 1, **caractérisé en ce que** la construction du modèle géométrique simplifié comprend une génération d'un maillage 3D dense décrivant la forme de la paire de lunettes.

3. Procédé selon la revendication 1, **caractérisé en ce que** la construction du modèle géométrique simplifié comprend une modélisation de la paire de lunettes réelles par un contour actif 3D lié à un maillage surfacique.

4. Procédé selon l'une quelconque des revendications 1 à 3, **caractérisé en ce que**, le nombre N de faces du modèle géométrique simplifié (6), est une valeur proche de vingt.

5. Procédé selon l'une quelconque des revendications 1 à 4, **caractérisé en ce que** l'étape de réalisation d'un ensemble de prise de vues de la paire de lunettes réelles (4) à modéliser est réalisé avec des angles de vues différents et en utilisant différents couleurs de fond (59) avec et sans la paire de lunettes réelles (4).

6. Procédé selon l'une quelconque des revendications 1 à 5, **caractérisé en ce que** le nombre V d'orientations de références est égal à neuf, et **en ce que** si on définit un repère orthogonal d'axes x, y, z, l'axe y correspondant à l'axe vertical, $\Psi$ l'angle de rotation autour de l'axe x, $\Phi$ l'angle de rotation autour de l'axe y, les V positions *Orientation$^i$* choisies sont telles que l'angle $\Psi$ prend sensiblement les valeurs respectives -16°, 0° ou 16°, l'angle $\Phi$ prend les valeurs respectives -16°, 0° ou 16°.

7. Procédé selon l'une quelconque des revendications 1 à 6, **caractérisé en ce qu'**il comprend en outre des étapes de :

- application au modèle géométrique simplifié, parmi un ensemble prédéterminé d'orientations de référence, d'une orientation la plus proche de l'orientation 3D d'un visage (2) sur lequel vient se positionner virtuellement la paire de lunettes, l'orientation 3D du visage comprenant des angles $\Phi$ et $\Psi$ de l'appareil ayant pris la photo (1) par rapport au plan principal de la zone de placement de l'objet,
- calcul d'une texture du modèle géométrique simplifié (6), positionné dans l'orientation 3D de l'orientation de référence la plus proche des angles $\Phi$ et $\Psi$, en utilisant la texture de cette orientation de référence, ce qui revient à texturer chacune des N faces du modèle géométrique simplifié (6) tout en classifiant la face dans la vue en cours en trois classes : face interne de la monture, face externe de la monture, verre.

8. Procédé selon l'une quelconque des revendications 1 à 7, **caractérisé en ce que** la phase 100 comprend une étape 120 de création d'un calque de texture de la monture *Monture$^i$,* pour chacune des V orientations de référence.

9. Procédé selon la revendication 8, **caractérisé en ce que** dans cette étape 120 :

- on prend pour chacune des V orientations de référence, l'image haute résolution de réflexion *Réflexion'*,
- on génère une image binaire de même résolution que l'image haute résolution de réflexion des orientations de référence, ladite image binaire étant appelée silhouette du verre *Verre$^i_{binaire}$.* dans cette silhouette du verre *Verre$^i_{binaire}$*, la valeur du pixel étant égal à un, si le pixel représente les verres (4b), et à zéro dans le cas contraire.

10. Procédé selon la revendication 9, **caractérisé en ce que** l'extraction de la forme des verres nécessaire pour générer la silhouette du verre $Verre^i_{binaire}$ se fait en utilisant un algorithme de contours actifs reposant sur le postulat que la monture (4a) et les verres (4b) ont des transparences différentes.

11. Procédé selon l'une quelconque des revendications 9 à 10, **caractérisé en ce que**, dans l'étape 120 :

   - on génère un calque de verre $Verre^i_{calque}$ pour chacune des orientations de référence, en copiant pour chaque pixel de valeur égale à un dans le calque binaire du verre $Verre^i_{binaire}$, l'information contenue dans l'image haute résolution de réflexion et en attribuant la valeur zéro aux autres pixels,
   ce calque de verre $Verre^i_{calque}$ est une image haute définition détourée du verre, utilisant, pour le détourage de l'image haute définition d'origine, la silhouette du verre $Verre^i_{binaire}$.
   - on choisit pour chacune des orientations de référence l'image haute résolution de réflexion $Réflexion^i$ associée, et on génère une image binaire fond $Fond^i_{binaire}$ par extraction automatique du fond,
   - on génère une image binaire calque binaire de monture $Monture^i_{binaire}$, en déduisant d'une image neutre l'image en ombre chinoise des verres et l'image en ombre chinoise du fond,
   - on génère un calque de texture de la monture derrière le verre $Monture^i_{derrière\_verre}$, de la texture de la monture correspondant à la partie de la monture située derrière les verres (4b), pour chacune des orientations de référence en copiant, pour chaque pixel de valeur égal à un dans le calque binaire verre $Verre^i_{binaire}$, l'information contenue dans l'image haute résolution de transmission $Transmission^i$, et en attribuant la valeur zéro aux autres pixels,
   - on génère un calque de texture de la monture à l'extérieur du verre $Monture^i_{extérieur\_verre}$ en copiant, pour chaque pixel de valeur égal à un dans le calque binaire monture $Monture^i_{binaire}$ l'information contenue dans l'image haute résolution de réflexion, et en attribuant la valeur zéro aux autres pixels,
   - on définit un calque de la texture de la monture $Monture^i$ comme la somme du calque de la texture de la monture derrière le verre $Monture^i_{derrière\_verre}$ et du calque de la texture de la monture à l'extérieur du verre $Monture^i_{extérieur\_verre}$.

12. Procédé selon l'une quelconque des revendications 7 à 11, **caractérisé en ce que**, le calcul de texture se fait en utilisant des calques associés à l'orientation de référence la plus proche des angles $\Phi$ et $\Psi$, par les sous-étapes suivantes :

   - inversion des normales $\vec{n}_j$ de chacune des faces de la paire de lunettes modélisée $face_j$ et projection du calque monture $Monture^i$, restreint à l'espace verre de l'orientation de référence la plus proche des angles $\Phi$ et $\Psi$ pour obtenir un calque de texture de face interne de monture $TextureMonture^i_{face\_interne}$ qui permet de structurer les branches de la monture (4a), vues à travers le verre (4b) dans un modèle texturé de référence (9) orienté selon l'orientation de référence la plus proche des angles $\Phi$ et $\Psi$,
   - projection du calque monture $Monture^i$, restreint à l'espace hors verre de l'orientation de référence la plus proche des angles $\Phi$ et $\Psi$ pour obtenir un calque de texture de face externe de monture $TextureMonture^i_{face\_externe}$ qui permet de structurer les faces extérieures au verre (4b) de la monture (4a), dans le modèle texturé de référence (9), orienté selon l'orientation de référence la plus proche des angles $\Phi$ et $\Psi$,
   - projection du calque verre restreinte au verre pour obtenir un calque de texture de verre $TextureVerre^i$ qui permet de structurer le verre (4b), dans le modèle texturé de référence (9), orienté selon l'orientation de référence, la plus proche des angles $\Phi$ et $\Psi$.

**Patentansprüche**

1. Verfahren zur Bestimmung eines vereinfachten geometrischen Modells (6) eines Modells eines realen Brillenpaares (4), wobei das genannte Modell aus einer vorbestimmten Anzahl N von Flächen und deren Normalen besteht, wobei als Orientierung dieser Normalen die Außenseite der konvexen Hülle des realen Brillenpaares (1) genommen wird, wobei das vereinfachte geometrische Modell (6) eines realen Brillenpaares (4), bestehend aus einer Fassung (4a) und Gläsern (4b), in einer Phase 100 erhalten wird, in der:

   - ein Satz von Aufnahmen des zu modellierenden realen Brillenpaares (4) mit unterschiedlichen Aufnahmewinkeln gemacht wird,
   - das vereinfachte geometrische Modell (6), bestehend aus einer Anzahl N von Flächen $face_j$ und deren Normalen $\vec{n}_j$ ausgehend von einem wenig dichten Oberflächennetz aufgebaut wird, und ein Optimierungsalgorithmus verwendet wird, der das Netz des Modells so verformt, dass die Projektionen seiner Silhouette in jeder der Ansichten bestmöglich den in den Bildern detektierten Silhouetten entsprechen;

die Phase 100 umfasst ferner einen Schritt 110, der darin besteht, Bilder des realen Brillenpaares (4) zu erhalten, währenddessen:

- das reale Brillenpaar 4 aus V verschiedenen Referenzorientierungen *Orientation[i]* in hoher Auflösung fotografiert wird und dies in N Beleuchtungskonfigurationen, die die Transmission und die Reflexion des Brillenglases (4b) offenbaren,
- diese Referenzorientierungen durch Diskretisierung eines Orientierungspektrums gewählt werden, das den bei einer Anprobe der Brille möglichen Orientierungen entspricht,
- V*N hochauflösende Bilder bezeichnet *Image-lunettes[i,j]* des realen Brillenpaares (4) erhalten werden;
- die erste Beleuchtungskonfiguration die Farben und Materialien des realen Brillenpaares (4) respektiert, indem neutrale Lichtbedingungen verwendet werden, wobei die in dieser Beleuchtungskonfiguration erzeugten V hochauflösenden Transmissionsbilder *Transmission[i]* die maximale Lichtdurchlässigkeit durch die Gläser (4b) offenbaren,
- die zweite Beleuchtungskonfiguration die geometrischen Besonderheiten des realen Brillenpaares (4) hervorhebt, indem intensive Reflexionsbedingungen verwendet werden, wobei die in dieser zweiten Beleuchtungskonfiguration erhaltenen V hochauflösenden Reflexionsbilder *Réflexion[i]* die physikalischen Reflexionseigenschaften des Glases (4b) offenbaren.

2. Verfahren nach Anspruch 1, **gekennzeichnet dadurch, dass** der Aufbau des vereinfachten geometrischen Modells die Erzeugung eines dichten 3D-Netzes umfasst, das die Form des Brillenpaares beschreibt.

3. Verfahren nach Anspruch 1, **gekennzeichnet dadurch, dass** der Aufbau des vereinfachten geometrischen Modells eine Modellierung des realen Brillenpaares durch einen an ein Oberflächennetz gebundenen 3D-Aktivkontur umfasst.

4. Verfahren nach einem der Ansprüche 1 bis 3, **gekennzeichnet dadurch, dass** die Anzahl N der Flächen des vereinfachten geometrischen Modells (6) einen Wert nahe zwanzig aufweist.

5. Verfahren nach einem der Ansprüche 1 bis 4, **gekennzeichnet dadurch, dass** der Schritt der Erstellung eines Satzes von Aufnahmen des zu modellierenden realen Brillenpaares (4) mit unterschiedlichen Aufnahmewinkeln und unter Verwendung verschiedener Hintergrundfarben (59) mit und ohne das reale Brillenpaar (4) durchgeführt wird.

6. Verfahren nach einem der Ansprüche 1 bis 5, **gekennzeichnet dadurch, dass** die Anzahl V der Referenzorientierungen gleich neun ist und dass, wenn ein orthogonales Koordinatensystem mit den Achsen x, y, z definiert wird, wobei die Achse y der vertikalen Achse entspricht, $\Psi$ der Rotationswinkel um die x-Achse und $\Phi$ der Rotationswinkel um die y-Achse ist, die gewählten V Positionen *Orientation[i]* so beschaffen sind, dass der Winkel $\Psi$ im Wesentlichen die jeweiligen Werte -16°, 0° oder 16° annimmt und der Winkel $\Phi$ die jeweiligen Werte -16°, 0° oder 16° annimmt.

7. Verfahren nach einem der Ansprüche 1 bis 6, **gekennzeichnet dadurch, dass** es ferner die Schritte umfasst:

- Anwendung auf das vereinfachte geometrische Modell, aus einem vorbestimmten Satz von Referenzorientierungen, einer an die 3D-Orientierung eines Gesichts (2), auf dem das Brillenpaar virtuell positioniert wird, am nächsten liegenden Orientierung, wobei die 3D-Orientierung des Gesichts die Winkel $\Phi$ und $\Psi$ des aufnehmenden Apparats (1) gegenüber der Hauptebene der Platzierungszone des Objekts umfasst,
- Berechnung einer Textur des vereinfachten geometrischen Modells (6), positioniert in der 3D-Orientierung der Referenzorientierung, die den Winkeln $\Phi$ und $\Psi$ am nächsten liegt, unter Verwendung der Textur dieser Referenzorientierung, was darin besteht, jede der N Flächen des vereinfachten geometrischen Modells (6) zu texturieren und dabei die Fläche in der aktuellen Ansicht in drei Klassen zu klassifizieren: innere Fläche der Fassung, äußere Fläche der Fassung, Glas.

8. Verfahren nach einem der Ansprüche 1 bis 7, **gekennzeichnet dadurch, dass** die Phase 100 einen Schritt 120 umfasst zur Erstellung einer Texturebene der Fassung *Monture[i]* für jede der V Referenzorientierungen.

9. Verfahren nach Anspruch 8, **gekennzeichnet dadurch, dass** in diesem Schritt 120:

- für jede der V Referenzorientierungen das hochauflösende Reflexionsbild *Réflexion[i]* genommen wird,
- ein binäres Bild mit derselben Auflösung wie das hochauflösende Reflexionsbild der Referenzorientierungen erzeugt wird, wobei dieses binäre Bild als Silhouette des Glases *Verre[i]_{binaire}* bezeichnet wird; in dieser Glas-

Silhouette *Verre^i_binaire* ist der Pixelwert gleich eins, wenn der Pixel die Gläser (4b) repräsentiert, und gleich null im anderen Fall.

**10.** Verfahren nach Anspruch 9, **gekennzeichnet dadurch, dass** die Extraktion der Form der Gläser, die zur Erzeugung der Glas-Silhouette *Verre^i_binaire* erforderlich ist, unter Verwendung eines Aktivkonturen-Algorithmus erfolgt, der auf dem Postulat beruht, dass die Fassung (4a) und die Gläser (4b) unterschiedliche Transparenzen aufweisen.

**11.** Verfahren nach einem der Ansprüche 9 bis 10, **gekennzeichnet dadurch, dass** in Schritt 120:

- eine Glasschicht *Verre^i_calque* für jede der Referenzorientierungen erzeugt wird, indem für jeden Pixel mit dem Wert eins in der binären Glasschicht *Verre^i_binaire* die in dem hochauflösenden Reflexionsbild enthaltenen Informationen kopiert und den anderen Pixeln der Wert null zugewiesen wird, diese Glasschicht *Verre^i_calque* eine freigestellte hochauflösende Abbildung des Glases darstellt, wobei für das Freistellen des hochauflösenden Ausgangsbildes die Glas-Silhouette *Verre^i_binaire* verwendet wird;
- für jede der Referenzorientierungen das zugehörige hochauflösende Reflexionsbild *Réflexion^i* gewählt wird, und ein binäres Hintergrundbild *Fond^i_binaire* automatisch durch Extraktion des Hintergrunds erzeugt wird,
- ein binäres Schichtbild der Fassung *Monture^i_binaire* erzeugt wird, indem aus einem neutralen Bild das Scherenschnittbild der Gläser und das Scherenschnittbild des Hintergrunds abgeleitet wird,
- eine Textur-Ebene der Fassung hinter dem Glas *Monture^i_derrière_verre* der Textur der Fassung, die dem Teil der Fassung hinter den Gläsern (4b) entspricht, für jede der Referenzorientierungen erzeugt wird, indem für jeden Pixel mit dem Wert eins in der binären Glasschicht *Verre^i_binaire* die in dem hochauflösenden Transmissionsbild *Transmission^i* enthaltenen Informationen kopiert und den anderen Pixeln der Wert null zugewiesen wird,
- eine Textur-Ebene der Fassung außerhalb des Glases *Monture^i_extérieur_verre* erzeugt wird, indem für jeden Pixel mit dem Wert eins in der binären Fassungsschicht *Monture^i_binaire* die in dem hochauflösenden Reflexionsbild enthaltenen Informationen kopiert und den anderen Pixeln der Wert null zugewiesen wird,
- eine Fassungstextur-Ebene *Monture^i* definiert wird als die Summe der Textur-Ebene der Fassung hinter dem Glas *Monture^i_derrière_verre* und der Textur-Ebene der Fassung außerhalb des Glases *Monture^i_extérieur_verre*.

**12.** Verfahren nach einem der Ansprüche 7 bis 11, **gekennzeichnet dadurch, dass** die Texturberechnung unter Verwendung von Ebenen, die mit der Referenzorientierung assoziiert sind, die den Winkeln $\Phi$ und $\Psi$ am nächsten liegt, durch die folgenden Unterschritte erfolgt:

- Inversion der Normalen $\vec{n}_j$ jeder der Flächen *face_j* des modellierten Brillenpaares und Projektion der Fassungs-schicht *Monture^i*, beschränkt auf den Glasbereich der Referenzorientierung, die den Winkeln $\Phi$ und $\Psi$ am nächsten liegt, um eine Textur-Ebene der inneren Fassungsfläche *TextureMonture^i_face_interne* zu erhalten, die es ermöglicht, die Bügel der Fassung (4a), gesehen durch das Glas (4b), in einem texturierten Referenzmodell (9), orientiert nach der Referenzorientierung, die den Winkeln $\Phi$ und $\Psi$ am nächsten liegt, zu strukturieren,
- Projektion der Fassungsschicht *Monture^i*, beschränkt auf den außerglasigen Bereich der Referenzorientierung, die den Winkeln $\Phi$ und $\Psi$ am nächsten liegt, um eine Textur-Ebene der äußeren Fassungsfläche *TextureMonture^i_face_externe* zu erhalten, die es ermöglicht, die außerhalb des Glases (4b) liegenden Außenseiten der Fassung (4a) im texturierten Referenzmodell (9), orientiert nach der Referenzorientierung, die den Winkeln $\Phi$ und $\Psi$ am nächsten liegt, zu strukturieren,
- Projektion der auf das Glas beschränkten Glasschicht, um eine Glas-Textur-Ebene *TextureVerre^i* zu erhalten, die es ermöglicht, das Glas (4b) im texturierten Referenzmodell (9), orientiert nach der Referenzorientierung, die den Winkeln $\Phi$ und $\Psi$ am nächsten liegt, zu strukturieren.

**Claims**

**1.** Method for determining a simplified geometric model (6) of a model of a pair of real glasses (4), said model being constituted of a predetermined number N of faces and of their normals, taking as orientation of these normals the exterior of the convex hull of the real pair of glasses (1), the simplified geometric model (6) of a pair of real glasses (4), constituted of a frame (4a) and of lenses (4b), being obtained in a phase 100 in which:

- a set of image acquisitions of the pair of real glasses (4) to be modeled is performed, with different viewing angles,
- the simplified geometric model (6), constituted of a number N of faces *face_j* and of their normal $\vec{n}_j$, is constructed starting from a low-density surface mesh, and using an optimization algorithm that deforms the model mesh so that the projections of its silhouette in each of the views correspond as well as possible to the silhouettes detected in the images;

the phase 100 also comprising a step 110 consisting in obtaining images of the pair of real glasses (4), during which:

- the pair of real glasses 4 is photographed at high resolution according to V different reference orientations $Orientation^i$ and this in N luminous configurations revealing the transmission and the reflection of the eyeglass lens (4b),
- these reference orientations are chosen by discretizing a spectrum of orientations corresponding to the possible orientations during a glasses fitting,
- V*N high-resolution images denoted $Image\text{-}lunette^{i,j}$ of the pair of real glasses (4) are obtained;
- the first luminous configuration preserves the colors and materials of the pair of real glasses (4) by using neutral lighting conditions, the V high-resolution transmission images $Transmission^i$ created in this luminous configuration allowing the maximal transmission of light through the lenses (4b) to be revealed,
- the second luminous configuration highlights the geometric particularities of the pair of real glasses (4), by using intense reflection conditions, the V high-resolution reflection images $Réflexion^i$ obtained in this second luminous configuration revealing the physical reflective qualities of the lens (4b).

2. Method according to claim 1, **characterized in that** the construction of the simplified geometric model comprises generation of a dense 3D mesh describing the shape of the pair of glasses.

3. Method according to claim 1, **characterized in that** the construction of the simplified geometric model comprises modeling of the pair of real glasses by a 3D active contour linked to a surface mesh.

4. Method according to any one of claims 1 to 3, **characterized in that** the number N of faces of the simplified geometric model (6) is a value close to twenty.

5. Method according to any one of claims 1 to 4, **characterized in that** the step of performing a set of image acquisitions of the pair of real glasses (4) to be modeled is carried out with different viewing angles and using different background colors (59) with and without the pair of real glasses (4).

6. Method according to any one of claims 1 to 5, **characterized in that** the number V of reference orientations is equal to nine, and **in that** if an orthogonal frame of axes x, y, z is defined, the y axis corresponding to the vertical axis, $\Psi$ the rotation angle around the x axis, $\Phi$ the rotation angle around the y axis, the V positions $Orientation^i$ chosen are such that the angle $\Psi$ takes substantially the respective values -16°, 0° or 16°, the angle $\Phi$ takes the respective values -16°, 0° or 16°.

7. Method according to any one of claims 1 to 6, **characterized in that** it furthermore comprises steps of:

- applying to the simplified geometric model, among a predetermined set of reference orientations, an orientation closest to the 3D orientation of a face (2) on which the pair of glasses is to be virtually positioned, the 3D orientation of the face comprising angles $\Phi$ and $\Psi$ of the apparatus having taken the photograph (1) with respect to the principal plane of the object placement area,
- calculating a texture of the simplified geometric model (6), positioned in the 3D orientation of the reference orientation closest to the angles $\Phi$ and $\Psi$, by using the texture of that reference orientation, which amounts to texturing each of the N faces of the simplified geometric model (6) while classifying the face in the current view into three classes: internal face of the frame, external face of the frame, lens.

8. Method according to any one of claims 1 to 7, **characterized in that** phase 100 comprises a step 120 of creating a frame texture layer $Monture^i$, for each of the V reference orientations.

9. Method according to claim 8, **characterized in that** in this step 120:

- for each of the V reference orientations, the high-resolution reflection image $Réflexion^i$ is taken,
- a binary image of the same resolution as the high-resolution reflection image of the reference orientations is generated, said binary image being called the lens silhouette $Verre^i_{binaire}$; in this lens silhouette $Verre^i_{binaire}$, the pixel value being equal to one if the pixel represents the lenses (4b), and equal to zero otherwise.

10. Method according to claim 9, **characterized in that** the extraction of the lens shape necessary to generate the lens silhouette $Verre^i_{binaire}$ is done using an active contour algorithm based on the postulate that the frame (4a) and the lenses (4b) have different transparencies.

11. Method according to any one of claims 9 to 10, **characterized in that**, in step 120:

- a lens layer $Verre^i_{calque}$ is generated for each reference orientation, by copying for each pixel of value equal to one in the binary lens layer $Verre^i_{binaire}$ the information contained in the high-resolution reflection image and assigning the value zero to the other pixels,

this lens layer $Verre^i_{calque}$ is a high-definition cropped image of the lens, using, for the cropping of the original high-definition image, the lens silhouette $Verre^i_{binaire}$.

- for each reference orientation the associated high-resolution reflection image $Réflexion^i$ is chosen, and a background binary image $Fond^i_{binaire}$ is generated by automatic background extraction,

- a binary frame layer image $Monture^i_{binaire}$ is generated, by deducing from a neutral image the silhouette shadow image of the lenses and the silhouette shadow image of the background,

- a texture layer of the frame behind the lens $Monture^i_{derrière\_verre}$ is generated, of the frame texture corresponding to the part of the frame located behind the lenses (4b), for each of the reference orientations by copying, for each pixel of value equal to one in the binary lens layer $Verre^i_{binaire}$, the information contained in the high-resolution transmission image $Transmission^i$, and assigning the value zero to the other pixels,

- a texture layer of the frame outside the lens $Monture^i_{extérieur\_verre}$ is generated by copying, for each pixel of value equal to one in the binary frame layer $Monture^i_{binaire}$, the information contained in the high-resolution reflection image, and assigning the value zero to the other pixels,

- a frame texture layer $Monture^i$ is defined as the sum of the frame texture layer behind the lens $Monture^i_{derrière\_verre}$ and of the frame texture layer outside the lens $Monture^i_{extérieur\_verre}$.

12. Method according to any one of claims 7 to 11, **characterized in that** the texture calculation is done using layers associated with the reference orientation closest to the angles $\Phi$ and $\Psi$, by the following sub-steps:

- inversion of the normals $\vec{n}_j$ of each of the faces $face_j$ of the modeled pair of glasses and projection of the frame layer $Monture^i$, restricted to the lens space of the reference orientation closest to the angles $\Phi$ and $\Psi$ to obtain an internal-frame face texture layer $TextureMonture^i_{face\_interne}$ which allows structuring of the branches of the frame (4a), seen through the lens (4b) in a textured reference model (9) oriented according to the reference orientation closest to the angles $\Phi$ and $\Psi$,

- projection of the frame layer $Monture^i$, restricted to the outside-lens space of the reference orientation closest to the angles $\Phi$ and $\Psi$ to obtain an external-frame face texture layer $TextureMonture^i_{face\_externe}$ which allows structuring of the faces external to the lens (4b) of the frame (4a), in the textured reference model (9), oriented according to the reference orientation closest to the angles $\Phi$ and $\Psi$,

- projection of the lens layer restricted to the lens to obtain a lens texture layer $TextureVerre^i$ which allows structuring of the lens (4b), in the textured reference model (9), oriented according to the reference orientation closest to the angles $\Phi$ and $\Psi$.

Fig. 1a

Fig. 1b

Fig. 1c

Fig. 1d

**Fig. 2**

$BD_{modèles\_lunettes}$

**Fig. 3**

orientation $^i$

4

$\Psi$

$\Phi$

y

x

z

**Fig. 4**

Vprises de vue luminosité neutre

Vprises de vue réflexions intenses

Transmission $^i$

réflexions $^i$

**Fig. 5**

images_lunettes $^i$

Fig. 6

20

6

21 Lumière

22 Camera

**Fig. 7a**

visage + lunettes

S7

B

t7

C

S5

t5

V

6

A

t1

21

Lumière

S1

**Fig. 7b**

App_yeux

Formule ← S(tx,ty,tz,s,o)

**Fig. 8**

visibilité

Lunettes calque

$L_{peau\_ombrée}$

$Lunettes_{calque\_binaire}$

$blend_\alpha$

**Fig. 9**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003063086 A1, BAUMBERG ADAM MICHAEL

**Littérature non-brevet citée dans la description**

- **C. HERNÁNDEZ** ; **F. SCHMITT** ; **R. CIPOLLA**. Silhouette Coherence for Camera Calibration under Circular Motion. *IEEE Transactions on Pattern Analysis and Machine Intelligence*, February 2007, vol. 29 (2), 343-349